# EUROPEAN PATENT SPECIFICATION

(11) **EP 3 777 137 B1**
(45) Date of publication and mention of the grant of the patent: **09.10.2024**
(21) Application number: 19781071.6
(22) Date of filing: 02.04.2019
(51) Int. Cl.: H04N 13/117, H04N 21/4728, G06F 3/01, G06F 3/0481, G06T 19/00, G02B 27/00

(54) **METHOD AND APPARATUS FOR SIGNALING OF VIEWING EXTENTS AND VIEWING SPACE FOR OMNIDIRECTIONAL CONTENT**
VERFAHREN UND VORRICHTUNG ZUR SIGNALISIERUNG DES BETRACHTUNGSAUSMASSES UND DES BETRACHTUNGSBEREICHS FÜR OMNIDIREKTIONALEN INHALT
PROCÉDÉ ET APPAREIL DE SIGNALISATION D'ÉTENDUES DE VISUALISATION ET D'ESPACE DE VISUALISATION POUR CONTENU OMNIDIRECTIONNEL

(30) Priority: 06.04.2018 US 201862654032 P
(43) Date of publication of application: 17.02.2021
(73) Proprietor: Nokia Technologies Oy, 02610 Espoo (FI)
(72) Inventor: AKSU, Emre, 33800 Tampere (FI); CURCIO, Igor, 33100 Tampere (FI); HANNUKSELA, Miska, 33610 Tampere (FI); MATE, Sujeet Shyamsundar, 33720 Tampere (FI); KAMMACHI SREEDHAR, Kashyap, 33720 Tampere (FI)
(74) Representative: Berggren Oy
(86) International application number: PCT/FI2019/050262
(87) International publication number: WO 2019/193251

(56) References cited:
- US-A1- 2005 123 171
- US-A1- 2005 123 171
- US-A1- 2014 118 509
- US-A1- 2014 118 509
- US-A1- 2015 094 142
- US-A1- 2015 094 142
- US-A1- 2018 077 210
- US-A1- 2018 077 210
- US-A1- 2018 093 186
- US-A1- 2018 093 186
- US-A1- 2018 373 412

## Description

### TECHNICAL FIELD

An example embodiment relates generally to encoding media content, particularly in the context of streaming virtual reality and other audiovisual content.

### BACKGROUND

Virtual reality audiovisual content, such as 360° video and other similar content, has become increasingly popular amongst viewers and content creators who prefer or otherwise enjoy the immersive viewing experience available from such content. This increase in the popularity of virtual reality content has driven viewer demand for streaming virtual reality content that provides a high-quality viewing experience.

Traditionally, a user of virtual reality content is located at the center of a unit sphere and has three degrees of freedom (yaw-pitch-roll), which is referred to as 3DoF. However, virtual reality audiovisual content does not generally respond to the translational motion of the user's head or body, thereby limiting the user experience and the immersive nature of virtual reality visual content.

US2018/093186A1 discloses a method for providing guidance to a user wearing a head mounted display. US2005/123171A1 discloses a mixed reality exhibiting method and apparatus. US2015/094142A1 discloses methods and systems for warning a user of a head mounted display during gameplay of a video game. US2014/118509A1 discloses an apparatus for generating an image signal for a display. US2018/077210A1 discloses a method, apparatus and computer program product to provide the rendering of audiovisual content, such as 360-degree virtual reality content, in a manner that allows for control over whether, and to what degree, the content presented to a viewer should take into account the relative positioning of the content with respect to the viewer.

### BRIEF SUMMARY

A method, apparatus and computer program product as defined by the independent claims are provided for signaling of viewing extents and viewing space for omnidirectional content which enables a response to translational motions.

In one example embodiment, a method is provided that includes receiving an indication associated with an observation setup of a set of transmission units of an audiovisual presentation. The observation setup comprises at least one observation point associated with a three dimensional (3D) viewing space region. The method of this example embodiment also includes receiving an indication associated with an intended behavior of a playback device. The method of this example embodiment also includes determining the intended behavior of the playback device. The method of this example embodiment also includes, in response to determining the intended behavior of the playback device, causing a control signal to be generated. The control signal is associated with a rendering operation of the audiovisual presentation on the playback device.

In some example implementations of such a method, the at least one observation point associated with a 3D viewing space region comprises at least one static observation point. In some example implementations of such a method, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and transition effects are implemented in a subset of the audiovisual presentation within the guard range.

In another example embodiment, an apparatus is provided that includes at least one processor and at least one memory that includes computer program code with the at least one memory and the computer program code configured to, with the at least one processor, cause the apparatus to at least receive an indication associated with an initial observation setup of a set of transmission units of an audiovisual presentation; receive an indication associated with an intended behavior of a playback device; determine the intended behavior of the playback device; and in response to determining the intended behavior of the playback device, cause a control signal to be generated. The control signal is associated with a rendering operation of the audiovisual presentation on the playback device.

In some example implementations, the observation setup comprises at least one observation point associated with a three dimensional (3D) viewing space region. In some such example implementations, the at least one observation point associated with a 3D viewing space region comprises at least one static observation point. In some such example implementations, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and transition effects are implemented in a subset of the audiovisual presentation within the guard range.

In another example embodiment, an apparatus is provided that includes means for receiving an indication associated with an initial observation setup of a set of transmission units of an audiovisual presentation. The apparatus also includes means for receiving an indication associated with an intended behavior of a playback device and means for determining the intended behavior of the playback device. The apparatus further includes means for in response to determining the intended behavior of the playback device, causing a control signal to be generated. The control signal is associated with a rendering operation of the audiovisual presentation on the playback device.

In some example implementations, the observation setup comprises at least one observation point associated with a three dimensional (3D) viewing space region. In some such example implementations, the at least one observation point associated with a 3D viewing space region comprises at least one static observation point. In some such example implementations, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and transition effects are implemented in a subset of the audiovisual presentation within the guard range.

In a further example embodiment, a computer program product is provided that includes at least one non-transitory computer-readable storage medium having computer-executable program code instructions stored therein with the computer-executable program code instructions including program code instructions configured to at least receive an indication associated with an initial observation setup of a set of transmission units of an audiovisual presentation; receive an indication associated with an intended behavior of a playback device; determine the intended behavior of the playback device; and in response to determining the intended behavior of the playback device, cause a control signal to be generated. The control signal is associated with a rendering operation of the audiovisual presentation on the playback device. The rendering operation of the audiovisual presentation on the playback device comprises selecting a portion of the audiovisual presentation.

In some example implementations, the observation setup comprises at least one observation point associated with a three dimensional (3D) viewing space region. In some such example implementations, the at least one observation point associated with a 3D viewing space region comprises at least one static observation point. In some such example implementations, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and transition effects are implemented in a subset of the audiovisual presentation within the guard range.

In yet another example embodiment, a method is provided that includes detecting an observation setup associated with a set of transmission units of an audiovisual presentation; in response to determining whether a condition associated with the observation setup is met; selecting a subset of the transmission units of an audiovisual presentation; and causing a control signal to be generated. The control signal is associated with a rendering operation of the selected subset of the transmission units of the audiovisual presentation on the playback device.

In some example implementations, the observation setup comprises at least one observation point associated with a three dimensional (3D) viewing space region. In some such example implementations, the at least one observation point associated with a 3D viewing space region comprises at least one static observation point. In some such example implementations, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and the transition effects are implemented in a subset of the audiovisual presentation within the guard range.

In another example embodiment, an apparatus is provided that includes at least one processor and at least one memory that includes computer program code with the at least one memory and the computer program code configured to, with the at least one processor, cause the apparatus to at least detect an observation setup associated with a set of transmission units of an audiovisual presentation; in response to determining whether a condition associated with the observation setup is met; select a subset of the transmission units of an audiovisual presentation; and cause a control signal to be generated. The control signal is associated with a rendering operation of the selected subset of the transmission units of the audiovisual presentation on the playback device.

In some example implementations, the observation setup comprises at least one observation point associated with a three dimensional (3D) viewing space region. In some such example implementations, the at least one observation point associated with a 3D viewing space region comprises at least one static observation point. In some such example implementations, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and the transition effects are implemented in a subset of the audiovisual presentation within the guard range.

In another example embodiment, an apparatus is provided that includes means for detecting an observation setup associated with a set of transmission units of an audiovisual presentation. The apparatus also includes means for in response to determining whether a condition associated with the observation setup is met; selecting a subset of the transmission units of an audiovisual presentation. The apparatus further includes means for causing a control signal to be generated. The control signal is associated with a rendering operation of the selected subset of the transmission units of the audiovisual presentation on the playback device.

In some such example embodiments, the observation setup comprises at least one observation point associated with a three dimensional (3D) viewing space region. In some such example implementations, the at least one observation point associated with a 3D viewing space region comprises at least one static observation point. In some such example implementations, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and the transition effects are implemented in a subset of the audiovisual presentation within the guard range.

In yet another example embodiment, a computer program product is provided that includes at least one non-transitory computer-readable storage medium having computer-executable program code instructions stored therein with the computer-executable program code instructions including program code instructions configured to at least detect an observation setup associated with a set of transmission units of an audiovisual presentation; in response to determining whether a condition associated with the observation setup is met; select a subset of the transmission units of an audiovisual presentation; and cause a control signal to be generated, the control signal is associated with a rendering operation of the selected subset of the transmission units of the audiovisual presentation on the playback device.

In some example implementations, the observation setup comprises at least one observation point associated with a three dimensional (3D) viewing space region. In some such example implementations, the at least one observation point associated with a 3D viewing space region comprises at least one static observation point. In some such example implementations, the at least one observation point associated with a 3D viewing space region comprises at least one dynamic observation point. In some such example implementations, and in other example implementations, the 3D viewing space region comprises a safe viewing space region and a maximum viewing space region. In some such example implementations, the 3D viewing space region comprises a guard range between the safe viewing space region and the maximum viewing space region; and the transition effects are implemented in a subset of the audiovisual presentation within the guard range.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
Figure 1 depicts an example system environment in which implementations in accordance with an example embodiment of the present invention may be performed;
Figure 2 is a block diagram of an apparatus that may be specifically configured in accordance with an example embodiment of the present invention;
Figure 3 is a graphical representation of terms referenced in connection with describing some of the example embodiments contained herein;
Figure 4 is a graphical representation of an implementation of a data structure in connection with describing some of the example embodiments contained herein;
Figure 5 is a flowchart illustrating a set of operations performed, such as by the apparatus of Figure 2, in accordance with the present invention:
Figure 6 is a flowchart illustrating a set of operations performed, such as by the apparatus of Figure 2, in accordance with of the present invention:
Figure 7 is a graphical representation of terms referenced in connection with describing some of the example embodiments contained herein;
Figure 8 is another graphical representation of terms referenced in connection with describing some of the example embodiments contained herein;
Figure 9 is another graphical representation of terms referenced in connection with describing some of the example embodiments contained herein; and
Figure 10 is a block diagram illustrating an example implementation performed in the context of an end-to-end audio-visual virtual reality application in accordance with an example embodiment of the present invention.

### DETAILED DESCRIPTION

Some embodiments will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a non-transitory physical storage medium (e.g., volatile or non-volatile memory device), can be differentiated from a "computer-readable transmission medium," which refers to an electromagnetic signal.

As used herein, the term "audiovisual presentation" refers to any combination of video and audio tracks presented to a user during a playback.

As used herein, the term "mapping" refers to either a process by which image data on a planar surface according to a projection is mapped to a two-dimensional plane, or to the image frame resulting from the process, depending on the context.

As used herein, the term "observation orientation" refers to an orientation being rendered. In many contexts, this is usually an orientation relative to the orientation of a head-mounted display used for rendering content.

As used herein the term "observation point" refers to a point or volume in a three-dimensional space for virtual reality audio/video acquisition or playback. An observation point is usually the same as the center point of a device or rig used for virtual reality audio/video acquisition as well as the position of the observer's head in the three-dimensional space in which the audio and video tracks are located. In some cases, an observation point might not correspond to a single center point of a capturing device or rig but a trajectory, such as a circle, a region, or a volume, for example. In some cases, an observer's head position is tracked and the rendering is adjusted for head movements in addition to head rotations, and then an observation point may be understood to be an initial or reference position of the observer's head. In implementations utilizing DASH (Dynamic adaptive streaming over HTTP), each observation point may be defined as a viewpoint by a viewpoint property descriptor.

As used herein, the term "static observation point" refers to an observation point that remains stationary during a virtual reality audio/video acquisition and playback session. For example, a static observation point may correspond with virtual reality audio/video acquisition performed by a fixed camera.

As used herein, the term "dynamic observation point" refers to an observation point that does not remain stationary during a virtual reality audio/video acquisition and playback session. For example, a dynamic observation point may correspond with virtual reality audio/video acquisition performed by a moving camera on rails or a moving camera on a flying drone.

As used herein, the term "observation setup" refers to a setup of one or more observation points and observation orientations. In the context of a presentation that has only one observation point available, the observation point need not be explicitly indicated or concluded for an observation setup.

As used herein, the term "projection" or "VR projection" refers to either a process by which a spherical image is projected onto a geometry, such as a planar surface or a cube, or the image frame resulting from the process. Examples of VR projections include equirectangular panorama and cubemap projections. In some contexts, the term projection may be understood to additionally comprise a mapping of a three-dimensional geometry, such as a cube map, onto one or more two-dimensional planes. Such mapping may comprise packing of a multitude of two-dimensional planes into the same frame (such as one two-dimensional plane, for example).

As used herein, the term "viewport" or "VR viewport" refers to a subset of an omnidirectional field of view. The term "viewport" may refer to a subset of the omnidirectional visual content currently being displayed for a user and/or a subset of the omnidirectional visual content that is coded with distinction (such as quality distinction or as a separable part, or a motion-constrained tile set, for example) from the remaining visual content. A distinction between these two definitions may be provided through a qualifier; such that the former may be referred to as a rendered viewport while the latter may be referred to as a coded viewport. In some cases a viewport may be represented by an orientation and a field of view, while in some other cases a viewport may be represented by an area, such as a rectangle, within a two-dimensional coordinate system for a particular projection format. An example of the latter is a rectangle within an equirectangular panorama image. A viewport may comprise several constituent viewports, which jointly form the viewport and may have different properties, such as picture quality.

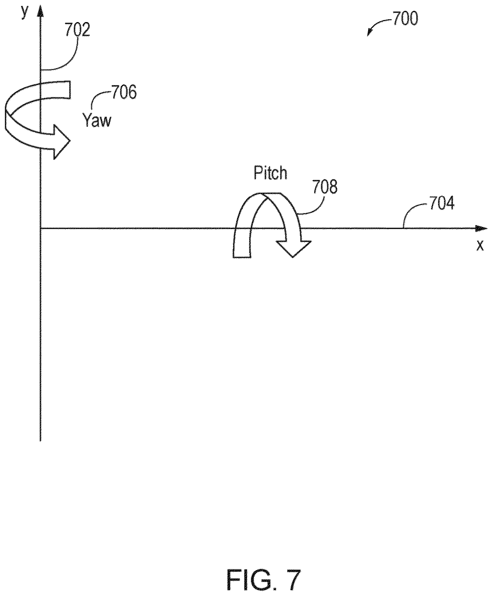

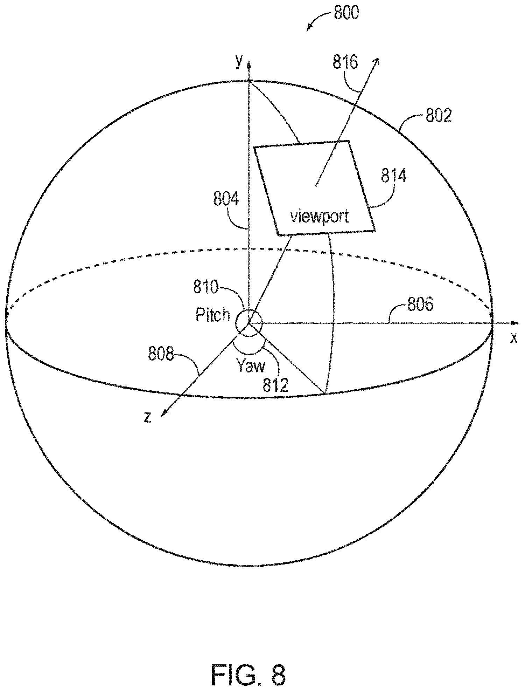

As used herein, an "orientation" (such as an orientation of a viewport, for example) may be represented by angular coordinates of a coordinate system. Angular coordinates may, for example, be called yaw, pitch, and roll, indicating the rotation angles around certain coordinate axes, such as y, x and z, respectively. Yaw, pitch, and roll may be used, for example, to indicate an orientation of a viewport. In some contexts, viewport orientation may be constrained; for example, roll may be constrained to be 0. In some such examples, and in other examples, yaw and pitch indicate the Euler angle of the center point of the viewport in degrees. In most contexts, yaw is applied prior to pitch, such that yaw rotates around the Y-axis, and pitch around the X-axis. Likewise, in most contexts, the angles increase clockwise as viewed when looking away from the origin. With reference to Figure 7, axes 700 include a Y-axis 702 and an X-axis 704. As shown in Figure 7, yaw 706 is depicted as a rotation around Y-axis 702, and pitch 708 is depicted as a rotation around X-axis 704. With reference to Figure 8, axes 800 are used to map a three-dimensional space 802 via Y-axis 804, X-axis 806, and Z-axis 808. As shown in Figure 8, pitch 810 and yaw 812 can be used to indicate the Euler angle of the center point of the viewport 814, which lies along vector 816.

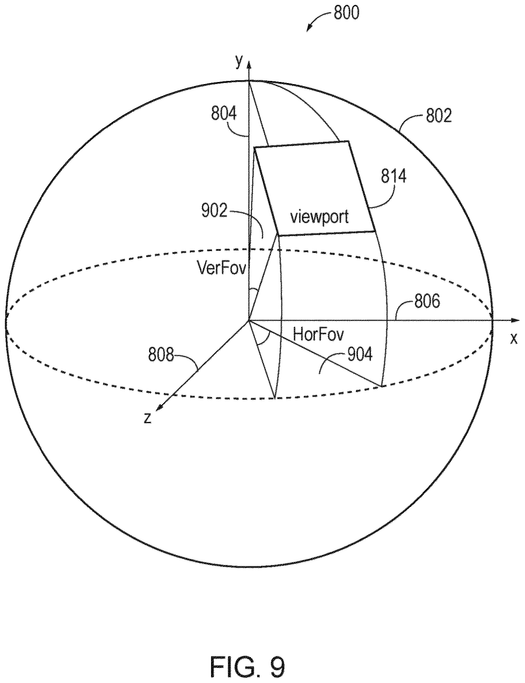

In some example implementations, a field of view (FOV) of a viewport may be represented by a horizontal FOV (HorFov) and a vertical FOV (VerFov). In some contexts HorFov and VerFov may be defined, for example, such that HorFov indicates the horizontal field of view of the viewport in degrees and VerFov indicates the vertical field of view of the viewport in degrees. An example depiction of the use of HorFov and VerFov to represent the FOV of a viewport is presented in Figure 9. In Figure 9, the same three dimensional space 802 from Figure 8 is mapped with axes 800 (including Y-axis 804, X-axis 806, and Z-axis 808). Viewport 814 is likewise placed within space 802. Rather than using pitch and/or yaw to express the Euler angle of the centerpoint of the viewport 814, Figure 9 depicts an example in which it is possible to represent the field of view of the viewport 814 as HorFov 902 and a VerFov 904.

As used herein, the term "viewing space (VS)" refers to a region in the real world where virtual reality audiovisual content would be responsive to a viewer's translational movement. For example, a viewer may move forward by 20 centimeters and the virtual reality audiovisual content may be responsive to the forward movement. Responsiveness may mean rendering an optimized synthesized or selected view which represents the spatial features of the content from the viewing position following the movement (e.g., occlusion and parallax handling). A viewing space may also be referred to as an "extent of freedom".

As used herein, the term "safe viewing space region" refers to a viewing space region where the virtual reality visual content would be responsive to the viewer's translational movement with no degradation in visual content quality.

As used herein, the term "maximum viewing space region" refers to a maximum allowed viewing space region where the virtual reality visual content would be responsive to the viewer's translational movement. However, degradation in visual content quality can occur if a view is inside the maximum viewing space region but outside the safe viewing space region.

As used herein, the term "guard range" refers to a range between safe and maximum viewing space regions. A region inside the guard range is not guaranteed to provide the best or fully optimized viewing experience. Transition effects may be utilized in a presentation of audiovisual content inside the guard range. For example, transition effects may include fading out, audio only playback, display of viewing cues for guidance, or the like.

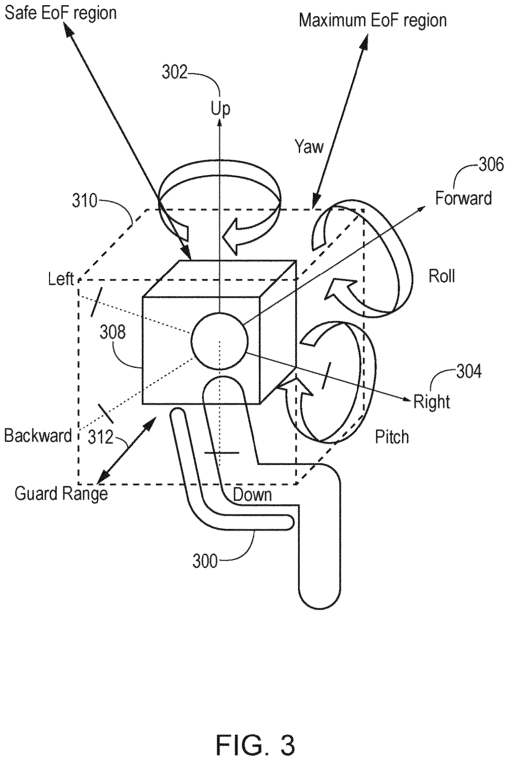

An example depiction of the safe and maximum viewing space region and the guard range is provided in Figure 3. In Figure 3, a viewer 300 may move rotationally based on the yaw, pitch and roll and the viewer 300 may also move translationally along the up/down axis 302, left/right axis 304, and forward/backward axis 306. Safe viewing space region 308 and maximum viewing space region 310 are provided. Guard range 312 indicates the range between the safe viewing space region 308 and maximum viewing space region 310.

As used herein, the term "global coordinate system" may refer to a three-dimensional coordinate system as described that has an origin in an observation point.

As used herein, the term "random access" may refer to the ability of a decoder to start decoding a stream at a point other than the beginning of the stream and recover an exact or approximate reconstructed media signal, such as a representation of the decoded pictures. A random access point and a recovery point may be used to characterize a random access operation. A random access point may be defined as a location in a media stream, such as an access unit or a coded picture within a video bitstream, where decoding can be initiated. A recovery point may be defined as a first location in a media stream or within the reconstructed signal characterized in that all media, such as decoded pictures, at or subsequent to a recovery point in output order are correct or approximately correct in content, when the decoding has started from the respective random access point. If the random access point is the same as the recovery point, the random access operation is instantaneous; otherwise, it may be gradual.

Random access points enable, for example, seek, fast forward play, and fast backward play operations in locally stored media streams as well as in media streaming. In contexts involving on-demand streaming, servers can respond to seek requests by transmitting data starting from the random access point that is closest to (and in many cases preceding) the requested destination of the seek operation and/or decoders can start decoding from the random access point that is closest to (and in many cases preceding) the requested destination of the seek operation. Switching between coded streams of different bit-rates is a method that is used commonly in unicast streaming to match the transmitted bitrate to the expected network throughput and to avoid congestion in the network. Switching to another stream is possible at a random access point. Furthermore, random access points enable tuning in to a broadcast or multicast. In addition, a random access point can be coded as a response to a scene cut in the source sequence or as a response to an intra picture update request.

Some example implementations contemplate the use of media file format standards that include, but are not limited to, ISO (International Organization for Standardization) base media file format (ISO/IEC 14496-12, which may be abbreviated ISOBMFF), MPEG-4 file format (ISO/IEC 14496-14, also known as the MP4 format), file format for NAL (Network Abstraction Layer) unit structured video (ISO/IEC 14496-15) and 3GPP file format (3GPP TS 26.244, also known as the 3GP format). The ISO base media file format is the base for derivation of all the above mentioned file formats (excluding the ISO base media file format itself).

Some concepts, structures, and specifications of ISOBMFF are described below as an example of a container file format, based on which the embodiments may be implemented. However, the aspects of the invention are not limited to ISOBMFF, but rather the description is given for one possible basis on top of which the invention may be partly or fully realized.

One building block in the ISOBMFF is called a box. Each box may have a header and a payload. The box header indicates the type of the box and the size of the box, typically in terms of bytes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISOBMFF may be considered to specify a hierarchical structure of boxes. Each box of the ISO base media file may be identified by a four-character code (4CC, fourCC). A four-character code may interchangeably be represented by a 32-bit unsigned integer (by assuming a certain conversion of characters to 8-bit values, a certain bit endianness, and a certain byte endianness). The header may provide information about the type and size of the box.

According to the ISOBMFF, a file may include media data and metadata that may be enclosed in separate boxes. In an example embodiment, the media data may be provided in a media data (mdat) box and the movie (moov) box may be used to enclose the metadata. In some cases, for a file to be operable, both of the mdat and moov boxes must be present. The movie (moov) box may include one or more tracks, and each track may reside in one corresponding track (trak) box. Each track is associated with a handler, identified by a four-character code, specifying the track type. Video, audio, and image sequence tracks can be collectively called media tracks, and they contain an elementary media stream. Other track types comprise hint tracks and timed metadata tracks. Tracks comprise samples, such as audio or video frames. A media track refers to samples (which may also be referred to as media samples) formatted according to a media compression format (and its encapsulation to the ISOBMFF). A hint track refers to hint samples, containing cookbook instructions for constructing packets for transmission over an indicated communication protocol. The cookbook instructions may include guidance for packet header construction and may include packet payload construction. In the packet payload construction, data residing in other tracks or items may be referenced. As such, for example, data residing in other tracks or items may be indicated by a reference as to which piece of data in a particular track or item is instructed to be copied into a packet during the packet construction process. A timed metadata track may refer to samples describing referred media and/or hint samples. For the presentation of one media type, one media track may be selected.

The 'trak' box contains a Sample Table box. The Sample Table box may include, for example, all the time and data indexing of the media samples in a track. Typically, the Sample Table box is required to contain a Sample Description box. The Sample Description box typically also includes an entry count field, specifying the number of sample entries included in the box. In most implementations, the Sample Description box is required to contain at least one sample entry. The sample entry format depends on the handler type for the track. Sample entries give detailed information about the coding type used and any initialization information needed for that coding.

The movie fragment feature may enable splitting the metadata that otherwise might reside in the movie box into multiple pieces. Each piece may correspond to a certain period of time of a track. In other words, the movie fragment feature may enable interleaving file metadata and media data. Consequently, the size of the movie box may be limited and the use cases mentioned above may be realized.

In some examples, the media samples for the movie fragments may reside in an mdat box. For the metadata of the movie fragments, however, a moof box may be provided. The moof box may include the information for a certain duration of playback time that would previously have been in the moov box. The moov box may still represent a valid movie on its own, but in addition, it may include an mvex box indicating that movie fragments will follow in the same file. The movie fragments may extend the presentation that is associated to the moov box in time.

Within the movie fragment there may be a set of track fragments, including anywhere from zero to a plurality per track. The track fragments may in turn include anywhere from zero to a plurality of track runs, each of which document is a contiguous run of samples for that track (and hence are similar to chunks). Within these structures, many fields are optional and can be defaulted. The metadata that may be included in the moof box may be limited to a subset of the metadata that may be included in a moov box and may be coded differently in some cases. Details regarding the boxes that can be included in a moof box may be found from the ISOBMFF specification. A self-contained movie fragment may be defined to consist of a moof box and an mdat box that are consecutive in the file order and where the mdat box contains the samples of the movie fragment (for which the moof box provides the metadata) and does not contain samples of any other movie fragment (i.e. any other moof box).

A sample grouping in the ISOBMFF and its derivatives, such as the file format for NAL unit structured video (ISO/IEC 14496-15), may be defined as an assignment of each sample in a track to be a member of one sample group, based on a grouping criterion. A sample group in a sample grouping is not limited to being contiguous samples and may contain non-adjacent samples. As there may be more than one sample grouping for the samples in a track, each sample grouping may have a type field to indicate the type of grouping. Sample groupings may be represented by two linked data structures: (1) a SampleToGroup box (sbgp box) represents the assignment of samples to sample groups; and (2) a SampleGroupDescription box (sgpd box) contains a sample group entry for each sample group describing the properties of the group. There may be multiple instances of the SampleToGroup and SampleGroupDescription boxes based on different grouping criteria. These may be distinguished by a type field used to indicate the type of grouping. The 'sbgp' and the 'sgpd' boxes may be linked using the value of grouping_type and, in some versions of the boxes, also the value of grouping_type_parameter. The 'sbgp' box indicates the index of the sample group description entry that a particular sample belongs to.

The Matroska file format is capable of (but not limited to) storing any of video, audio, picture, or subtitle tracks in one file. Matroska file extensions include .mkv for video (with subtitles and audio), .mk3d for stereoscopic video, .mka for audio-only files, and .mks for subtitles only. Matroska may be used as a basis format for derived file formats, such as WebM.

Matroska uses Extensible Binary Meta Language (EBML) as a basis. EBML specifies a binary and octet (byte) aligned format inspired by the principle of XML. EBML itself is a generalized description of the technique of binary markup. A Matroska file consists of Elements that make up an EBML "document." Elements incorporate an Element ID, a descriptor for the size of the element, and the binary data itself. Elements can be nested.

A Segment Element of Matroska is a container for other top-level (level 1) elements. A Matroska file may comprise (but is not limited to be composed of) one Segment. Multimedia data in Matroska files is organized in Clusters (or Cluster Elements), each containing typically a few seconds of multimedia data. A Cluster comprises BlockGroup elements, which in turn comprise Block Elements. A Cues Element comprises metadata which may assist in random access or seeking and may include file pointers or respective timestamps for seek points.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

Hypertext Transfer Protocol (HTTP) has been widely used for the delivery of real-time multimedia content over the Internet, such as in video streaming applications. Several commercial solutions for adaptive streaming over HTTP, such as Microsoft^{®} Smooth Streaming, Apple^{®} Adaptive HTTP Live Streaming and Adobe^{®} Dynamic Streaming, have been launched as well as standardization projects have been carried out. Adaptive HTTP streaming (AHS) was first standardized in Release 9 of 3rd Generation Partnership Project (3GPP) packet-switched streaming (PSS) service (3GPP TS 26.234 Release 9: "Transparent end-to-end packet-switched streaming service (PSS); protocols and codecs"). MPEG took 3GPP AHS Release 9 as a starting point for the MPEG DASH standard (ISO/IEC 23009-1: "Dynamic adaptive streaming over HTTP (DASH)-Part 1: Media presentation description and segment formats"). MPEG DASH and 3GP-DASH are technically close to each other and may therefore be collectively referred to as DASH. Some concepts, formats, and operations of DASH are described below as an example of a video streaming system, wherein the embodiments may be implemented. The aspects of the invention are not limited to DASH, but rather the description is given for one possible basis on top of which the invention may be partly or fully realized.

In DASH, the multimedia content may be stored on an HTTP server and may be delivered using HTTP. The content may be stored on the server in two parts: Media Presentation Description (MPD), which describes a manifest of the available content, its various alternatives, their URL addresses, and other characteristics; and segments, which contain the actual multimedia bitstreams in the form of chunks, in a single or multiple files. The MPD provides the necessary information for clients to establish a dynamic adaptive streaming over HTTP. The MPD contains information describing media presentation, such as an HTTP-uniform resource locator (URL) of each Segment to make a GET Segment request. To play the content, the DASH client may obtain the MPD by using HTTP, email, thumb drive, broadcast, or other transport methods, for example. By parsing the MPD, the DASH client may become aware of the program timing, media-content availability, media types, resolutions, minimum and maximum bandwidths, and the existence of various encoded alternatives of multimedia components, accessibility features and required digital rights management (DRM), media-component locations on the network, and other content characteristics. Using this information, the DASH client may select the appropriate encoded alternative and start streaming the content by fetching the segments using HTTP GET requests, for example. After appropriate buffering to allow for network throughput variations, the client may continue fetching the subsequent segments and also monitor the network bandwidth fluctuations. The client may decide how to adapt to the available bandwidth by fetching segments of different alternatives (with lower or higher bitrates) to maintain an adequate buffer.

In the context of DASH, the following definitions may be used: A media content component or a media component may be defined as one continuous component of the media content with an assigned media component type that can be encoded individually into a media stream. Media content may be defined as one media content period or a contiguous sequence of media content periods. Media content component type may be defined as a single type of media content such as audio, video, or text. A media stream may be defined as an encoded version of a media content component.

In DASH, a hierarchical data model is used to structure a media presentation as follows. A media presentation consists of a sequence of one or more Periods, each Period contains one or more Groups, each Group contains one or more Adaptation Sets, each Adaptation Sets contains one or more Representations, each Representation consists of one or more Segments. A Group may be defined as a collection of Adaptation Sets that are not expected to be presented simultaneously. An Adaptation Set may be defined as a set of interchangeable encoded versions of one or several media content components. A Representation is one of the alternative choices of the media content or a subset thereof typically differing by the encoding choice, such as by bitrate, resolution, language, codec, or the like, for example. The Segment contains a certain duration of media data, and metadata to decode and present the included media content. A Segment is identified by a URI and can typically be requested by a HTTP GET request. A Segment may be defined as a unit of data associated with an HTTP-URL and optionally a byte range that are specified by an MPD.

The DASH MPD complies with Extensible Markup Language (XML) and is therefore specified through elements and attributes as defined in XML. The MPD may be specified using the following conventions: Elements in an XML document may be identified by an upper-case first letter and may appear in bold face as **Element.** To express that an element **Element1** is contained in another element **Element2,** one may write **Element2.Element1.** If an element's name consists of two or more combined words, camel-casing may be used, such as **ImportantElement,** for example. Elements may be present either exactly once, or the minimum and maximum occurrence may be defined by <minOccurs> ... <maxOccurs>. Attributes in an XML document may be identified by a lower-case first letter as well as they may be preceded by a '@'-sign, e.g. @attribute, for example. To point to a specific attribute @attribute contained in an element **Element,** one may write **Element**@ attribute. If an attribute's name consists of two or more combined words, camel-casing may be used after the first word, such as @very ImportantAttribute, for example. Attributes may have assigned a status in the XML as mandatory (M), optional (O), optional with default value (OD) and conditionally mandatory (CM).

In DASH, all descriptor elements are typically structured in the same way, in that they contain a @ schemeIdUri attribute that provides a URI to identify the scheme and an optional attribute @value and an optional attribute @id. The semantics of the element are specific to the scheme employed. The URI identifying the scheme may be a URN or a URL. Some descriptors are specified in MPEG-DASH (ISO/IEC 23009-1), while descriptors can additionally or alternatively be specified in other specifications. When specified in specifications other than MPEG-DASH, the MPD does not provide any specific information on how to use descriptor elements. It is up to the application or specification that employs DASH formats to instantiate the description elements with appropriate scheme information. Applications or specifications that use one of these elements define a Scheme Identifier in the form of a URI and the value space for the element when that Scheme Identifier is used. The Scheme Identifier appears in the @schemeIdUri attribute. In the case that a simple set of enumerated values are required, a text string may be defined for each value and this string may be included in the @value attribute. If structured data is required then any extension element or attribute may be defined in a separate namespace. The @id value may be used to refer to a unique descriptor or to a group of descriptors. In the latter case, descriptors with identical values for the attribute @id may be required to be synonymous, i.e. the processing of one of the descriptors with an identical value for @id is sufficient. Two elements of type DescriptorType are *equivalent,* if the element name, the value of the @schemeIdUri and the value of the @value attribute are equivalent. If the @schemeIdUri is a URN, then equivalence may refer to lexical equivalence as defined in clause 5 of RFC 2141. If the @schemeIdUri is a URL, then equivalence may refer to equality on a character-for-character basis as defined in clause 6.2.1 of RFC3986. If the @value attribute is not present, equivalence may be determined by the equivalence for @ schemeIdUri only. Attributes and element in extension namespaces might not be used for determining equivalence. The @id attribute may be ignored for equivalence determination.

MPEG-DASH specifies descriptors EssentialProperty and SupplementalProperty. For the element EssentialProperty the Media Presentation author expresses that the successful processing of the descriptor is essential to properly use the information in the parent element that contains this descriptor unless the element shares the same @id with another EssentialProperty element. If EssentialProperty elements share the same @id, then processing one of the EssentialProperty elements with the same value for @id is sufficient. At least one EssentialProperty element of each distinct @id value is expected to be processed. If the scheme or the value for an EssentialProperty descriptor is not recognized the DASH client is expected to ignore the parent element that contains the descriptor. Multiple EssentialProperty elements with the same value for @id and with different values for @id may be present in an MPD.

For the element SupplementalProperty the Media Presentation author expresses that the descriptor contains supplemental information that may be used by the DASH client for optimized processing. If the scheme or the value for a SupplementalProperty descriptor is not recognized the DASH client is expected to ignore the descriptor. Multiple SupplementalProperty elements may be present in an MPD.

MPEG-DASH specifies a **Viewpoint** element that is formatted as a property descriptor. The @schemeIdUri attribute of the **Viewpoint** element is used to identify the viewpoint scheme employed. Adaptation Sets containing non-equivalent **Viewpoint** element values contain different media content components. The **Viewpoint** elements may equally be applied to media content types that are not video. Adaptation Sets with equivalent **Viewpoint** element values are intended to be presented together. This handling should be applied equally for recognized and unrecognized @schemeIdUri values.

SRD (Spatial Relationship Description) is specified in the normative Annex H of MPEG-DASH. The following contains some excerpts of the SRD specification.

The SRD scheme allows Media Presentation Description authors to express spatial relationships between Spatial Objects. A Spatial Object is represented by either an Adaptation Set or a Sub-Representation. As an example, a spatial relationship may express that a video represents a spatial part of another full-frame video (e.g. a region of interest, or a tile).

The SupplementalProperty and/or EssentialProperty descriptors with @schemeIdUri equal to "urn:mpeg:dash:srd:2014" are used to provide spatial relationship information associated to the containing Spatial Object. SRD may be contained exclusively in these two MPD elements (AdaptationSet and SubRepresentation).

Sub-Representation level SRDs may be used to represent Spatial Objects in one Representation such as HEVC tiling streams. In that case, SRD descriptors may be present at Adaptation Set as well as Sub-Representation levels.

The @value of the SupplementalProperty or EssentialProperty elements using the SRD scheme is a comma separated list of values for SRD parameters. The SRD parameters source_id, object_x, object_y, object_width, and object_height are required to be present and the SRD parameters total_width, total_height, and spatial_set_id are conditionally or optionally present.

source_id is a non-negative integer in decimal representation providing the identifier for the source of the content. The source_id parameter provides a unique identifier, within the Period, for the source of the content. It implicitly defines a coordinate system associated to this source. This coordinate system uses an arbitrary origin (0; 0); the x-axis is oriented from left to right and the y-axis from top to bottom. All SRD sharing the same source_id value have the same origin and axes orientations. Spatial relationships for Spatial Objects using SRD with different source_id values are undefined.

For a given source_id value, a reference space is defined, corresponding to the rectangular region encompassing the entire source content, whose top-left corner is at the origin of the coordinate system. The total_width and total_height values in a SRD provide the size of this reference space expressed in arbitrary units. total_width is a non-negative integer in decimal representation expressing the width of the reference space in arbitrary units. total_height is a non-negative integer in decimal representation expressing the height of the reference space in arbitrary units. It is allowed that there is no Spatial Object in the MPD that covers the entire source of the content, e.g. when the entire source content is represented by two separate videos.

object_x is a non-negative integer in decimal representation expressing the horizontal position of the top-left corner of the Spatial Object in arbitrary units. object_y is a non-negative integer in decimal representation expressing the vertical position of the top-left corner of the Spatial Object in arbitrary units. object_width is a non-negative integer in decimal representation expressing the width of the Spatial Object in arbitrary units. object_height is a non-negative integer in decimal representation expressing the height of the Spatial Object in arbitrary units. The object_x and object_y parameters (respectively object_width and object_height) express 2D positions (respectively 2D sizes) of the associated Spatial Object in the coordinate system associated to the source. The values of the object_x, object_y, object_width, and object_height parameters are relative to the values of the total_width and total_height parameters, as defined above. Positions (object_x, object_y) and sizes (object_width, object_height) of SRDs sharing the same source_id value may be compared after taking into account the size of the reference space, i.e. after the object_x and object_width values are divided by the total_width value and the object_y and object_height values divided by the total_height value of their respective descriptors. Different total_width and total_height values may be used in different descriptors to provide positions and sizes information in different units for the same reference space.

spatial_set_id is a non-negative integer in decimal representation providing an identifier for a group of Spatial Objects. When not present, the Spatial Object associated to this descriptor does not belong to any spatial set and no spatial set information is given. MPD authors can express, using the spatial_set_id parameter, that some Spatial Objects, within a given source_id, have a particular spatial relationship. For instance, an MPD author may group all Adaptation Sets corresponding to tiles at a same resolution level. This way, the spatial_set_id parameter may be used by the DASH client to quickly select spatially related Spatial Objects.

An Initialization Segment may be defined as a Segment containing metadata that is necessary to present the media streams encapsulated in Media Segments. In ISOBMFF based segment formats, an Initialization Segment may comprise the Movie Box ('moov') which might not include metadata for any samples, i.e. any metadata for samples is provided in 'moof boxes.

A Media Segment contains certain duration of media data for playback at a normal speed, such duration is referred as Media Segment duration or Segment duration. The content producer or service provider may select the Segment duration according to the desired characteristics of the service. For example, a relatively short Segment duration may be used in a live service to achieve a short end-to-end latency. The reason is that Segment duration is typically a lower bound on the end-to-end latency perceived by a DASH client since a Segment is a discrete unit of generating media data for DASH. Content generation is typically done such a manner that a whole Segment of media data is made available for a server. Furthermore, many client implementations use a Segment as the unit for GET requests. Thus, in typical arrangements for live services a Segment can be requested by a DASH client only when the whole duration of Media Segment is available as well as encoded and encapsulated into a Segment. For on-demand service, different strategies of selecting Segment duration may be used.

A Segment may be further partitioned into Subsegments to enable downloading segments in multiple parts, for example. Subsegments may be required to contain complete access units. Subsegments may be indexed by Segment Index box, which contains information to map presentation time range and byte range for each Subsegment. The Segment Index box may also describe subsegments and stream access points in the segment by signaling their durations and byte offsets. A DASH client may use the information obtained from Segment Index box(es) to make a HTTP GET request for a specific Subsegment using byte range HTTP request. If a relatively long Segment duration is used, then Subsegments may be used to keep the size of HTTP responses reasonable and flexible for bitrate adaptation. The indexing information of a segment may be put in the single box at the beginning of that segment, or spread among many indexing boxes in the segment. Different methods of spreading are possible, such as hierarchical, daisy chain, and hybrid, for example. This technique may avoid adding a large box at the beginning of the segment and therefore may prevent a possible initial download delay.

Sub-Representations are embedded in regular Representations and are described by the **SubRepresentation** element. **SubRepresentation** elements are contained in a **Representation** element. The **SubRepresentation** element describes properties of one or several media content components that are embedded in the Representation. It may for example describe the exact properties of an embedded audio component (such as codec, sampling rate, etc., for example), an embedded sub-title (such as codec, for example) or it may describe some embedded lower quality video layer (such as some lower frame rate, or otherwise, for example). Sub-Representations and Representation share some common attributes and elements. In case the @level attribute is present in the **SubRepresentation** element, the following applies:
- Sub-Representations provide the ability for accessing a lower quality version of the Representation in which they are contained. In this case, Sub-Representations for example allow extracting the audio track in a multiplexed Representation or may allow for efficient fast-forward or rewind operations if provided with lower frame rate;
- The Initialization Segment and/or the Media Segments and/or the Index Segments may provide sufficient information such that the data can be easily accessed through HTTP partial GET requests. The details on providing such information are defined by the media format in use.
- When ISOBMFF Segments are used, the following applies:
   ∘ The Initialization Segment contains the Level Assignment box.
   ∘ The Subsegment Index box ('ssix') is present for each Subsegment.
   ∘ The attribute @level specifies the level to which the described Sub-Representation is associated to in the Subsegment Index. The information in Representation, Sub-Representation and in the Level Assignment ('leva') box contains information on the assignment of media data to levels.
   ∘ Media data should have an order such that each level provides an enhancement compared to the lower levels.

If the @level attribute is absent, then the SubRepresentation element is solely used to provide a more detailed description for media streams that are embedded in the Representation.

The ISOBMFF includes the so-called level mechanism to specify subsets of the file. Levels follow the dependency hierarchy so that samples mapped to level n may depend on any samples of levels m, where m <= n, and do not depend on any samples of levels p, where p > n. For example, levels can be specified according to temporal sub-layer (e.g., TemporalId of HEVC). Levels may be announced in the Level Assignment ('leva') box contained in the Movie Extends ('mvex') box. Levels cannot be specified for the initial movie. When the Level Assignment box is present, it applies to all movie fragments subsequent to the initial movie. For the context of the Level Assignment box, a fraction is defined to consist of one or more Movie Fragment boxes and the associated Media Data boxes, possibly including only an initial part of the last Media Data Box. Within a fraction, data for each level appears contiguously. Data for levels within a fraction appears in increasing order of level value. All data in a fraction is assigned to levels. The Level Assignment box provides a mapping from features, such as scalability layers or temporal sub-layers, to levels. A feature can be specified through a track, a sub-track within a track, or a sample grouping of a track. For example, the Temporal Level sample grouping may be used to indicate a mapping of the pictures to temporal levels, which are equivalent to temporal sub-layers in HEVC. That is, HEVC pictures of a certain TemporalId value may be mapped to a particular temporal level using the Temporal Level sample grouping (and the same can be repeated for all TemporalId values). The Level Assignment box can then refer to the Temporal Level sample grouping in the indicated mapping to levels.

The Subsegment Index box ('ssix') provides a mapping from levels (as specified by the Level Assignment box) to byte ranges of the indexed subsegment. In other words, this box provides a compact index for how the data in a subsegment is ordered according to levels into partial subsegments. It enables a client to easily access data for partial subsegments by downloading ranges of data in the subsegment. When the Subsegment Index box is present, each byte in the subsegment is assigned to a level. If the range is not associated with any information in the level assignment, then any level that is not included in the level assignment may be used. There is 0 or 1 Subsegment Index boxes present per each Segment Index box that indexes only leaf subsegments, i.e. that only indexes subsegments but no segment indexes. A Subsegment Index box, if any, is the next box after the associated Segment Index box. A Subsegment Index box documents the subsegment that is indicated in the immediately preceding Segment Index box. Each level may be assigned to exactly one partial subsegment, i.e. byte ranges for one level are contiguous. Levels of partial subsegments are assigned by increasing numbers within a subsegment, i.e., samples of a partial subsegment may depend on any samples of preceding partial subsegments in the same subsegment, but not the other way around. For example, each partial subsegment contains samples having an identical temporal sub-layer and partial subsegments appear in increasing temporal sub-layer order within the subsegment. When a partial subsegment is accessed in this way, the final Media Data box may be incomplete, that is, less data is accessed than the length indication of the Media Data Box indicates is present. The length of the Media Data box may need adjusting, or padding may be used. The padding_flag in the Level Assignment Box indicates whether this missing data can be replaced by zeros. If not, the sample data for samples assigned to levels that are not accessed is not present, and care should be taken.

MPEG-DASH defines segment-container formats for both ISOBMFF and MPEG-2 Transport Streams. Other specifications may specify segment formats based on other container formats. For example, a segment format based on Matroska container file format has been proposed and may be summarized as follows. When Matroska files are carried as DASH segments or alike, the association of DASH units and Matroska units may be specified as follows. A subsegment (of DASH) may be are defined as one or more consecutive Clusters of Matroska-encapsulated content. An Initialization Segment of DASH may be required to comprise the EBML header, Segment header (of Matroska), Segment Information (of Matroska) and Tracks, and may optionally comprise other level1 elements and padding. A Segment Index of DASH may comprise a Cues Element of Matroska.

DASH supports rate adaptation by dynamically requesting Media Segments from different Representations within an Adaptation Set to match varying network bandwidth. When a DASH client switches up/down Representation, coding dependencies within Representation have to be taken into account. A Representation switch may happen at a random access point (RAP), which is typically used in video coding techniques such as H.264/AVC. In DASH, a more general concept named Stream Access Point (SAP) is introduced to provide a codec-independent solution for accessing a Representation and switching between Representations. In DASH, a SAP is specified as a position in a Representation that enables playback of a media stream to be started using only the information contained in Representation data starting from that position onwards (preceded by initializing data in the Initialization Segment, if any). Hence, Representation switching can be performed in SAP.

Several types of SAP have been specified, including the following. SAP Type 1 corresponds to what is known in some coding schemes as a "Closed GOP random access point" (in which all pictures, in decoding order, can be correctly decoded, resulting in a continuous time sequence of correctly decoded pictures with no gaps) and in addition the first picture in decoding order is also the first picture in presentation order. SAP Type 2 corresponds to what is known in some coding schemes as a "Closed GOP random access point" (in which all pictures, in decoding order, can be correctly decoded, resulting in a continuous time sequence of correctly decoded pictures with no gaps), for which the first picture in decoding order may not be the first picture in presentation order. SAP Type 3 corresponds to what is known in some coding schemes as an "Open GOP random access point", in which there may be some pictures in decoding order that cannot be correctly decoded and have presentation times less than intra-coded picture associated with the SAP.

In some video coding standards, such as MPEG-2, each intra picture has been a random access point in a coded sequence. The capability of flexible use of multiple reference pictures for inter prediction in some video coding standards, such as H.264/AVC and H.265/HEVC, has a consequence that an intra picture may not be sufficient for random access. Therefore, pictures may be marked with respect to their random access point functionality rather than inferring such functionality from the coding type; for example an IDR picture as specified in the H.264/AVC standard can be used as a random access point. A closed group of pictures (GOP) is such a group of pictures in which all pictures can be correctly decoded. For example, in H.264/AVC, a closed GOP may start from an IDR access unit (or from an intra coded picture with a memory management control operation marking all prior reference pictures as unused).

An open group of pictures (GOP) is such a group of pictures in which pictures preceding the initial intra picture in output order may not be correctly decodable but pictures following the initial intra picture are correctly decodable. Such an initial intra picture may be indicated in the bitstream and/or concluded from the indications from the bitstream, e.g. by using the CRA NAL unit type in HEVC or the recovery point SEI message in H.264/AVC. The pictures preceding the initial intra picture starting an open GOP may be referred to as leading pictures. There are two types of leading pictures: decodable and non-decodable. Decodable leading pictures are such that can be correctly decoded when the decoding is started from the initial intra picture starting the open GOP. In other words, decodable leading pictures use only the initial intra picture or subsequent pictures in decoding order as reference in inter prediction. Non-decodable leading pictures are such that cannot be correctly decoded when the decoding is started from the initial intra picture starting the open GOP.

As described above, the client or player may request Segments or Subsegments to be transmitted from different representations similarly to how the transmitted layers and/or sub-layers of a scalable video bitstream may be determined. Terms representation down-switching or bitstream down-switching may refer to requesting or transmitting a lower bitrate representation than what was requested or transmitted (respectively) previously. Terms representation up-switching or bitstream up-switching may refer to requesting or transmitting a higher bitrate representation than what was requested or transmitted (respectively) previously. Terms representation switching or bitstream switching may refer collectively to representation or bitstream up- and down-switching and may also or alternatively cover switching of representations or bitstreams of different viewpoints.

To enable responsiveness to translational movement of a viewer and to define safe and maximum viewing space regions, different data structures may be defined, stored and signaled depending on whether an observation point associated with the audiovisual content is static or dynamic.

For static observation points, a box called *VSConfigBox()* is defined at the ISOBMFF compliant file format level. The containing data structure for *VSConfingBox()* may be, but is not limited to, one or more of the following:
1. When the content is represented by a video track(s), *VSConfigBox()* may be contained in the related VisualSampleEntry of the related video track(s)
2. When the content is represented by a group of video tracks, such as sub-picture tracks that collectively represent the content, *VSConfigBox()* may be contained in the visual sample entries of all the group of tracks, or in the visual sample entry of the extractor track that is implicitly referencing the sub-picture tracks..
3. When the content is represented by image item(s), *VSConfigBox()* may be contained in an item property that is associated with the related image item(s).
This box may be stored in the VisualSampleEntry as defined in ISOBMFF and referenced in OMAF specifications. In another embodiment, this box may be stored in any box container or location in the ISOBMFF compliant file and then related to the relevant visual or audio tracks via other means. *VSConfigBox* could be used to indicate the X,Y,Z translational freedom of the viewer. Translational freedom may be different in each positive or negative axis. A guard range may be present and its coverage size may be different for each positive and negative axis. In one example, the data structure of this box could be as follows:

```
aligned(8) ViewingSpaceStruct {
  unsigned int(16) distance_scale;
  bool guard_range_indicator;
  bool symmetric_range_indicator;
  unsigned int (6) reserved;
  unsigned int(16) max_XP; // these values are defined in distance scale
  unsigned int(16) max_YP;
  unsigned int(16) max_ZP;
  if (!symmetric_range_indicator)
  {
    unsigned int(16) max_XN;
    unsigned int(16) max_YN;
    unsigned int(16) max_ZN; }
  if (guard_range_indicator)
  {
    unsigned int(8) guard_range_XP;
    unsigned int(8) guard_range_YP;
    unsigned int(8) guard_range_ZP;
    if (!symmetric_range_indicator)
    {
     unsigned int(8) guard_range_XN;
     unsigned int(8) guard_range_YN;
     unsigned int(8) guard_range_ZN;
     
    }
  }
 }
 class VSConfigBox(type) extends FullBox('vspc',0,flags) {
      ViewingSpaceStruct ();
 }
```

VSConfigBox could be defined as a box or full box as defined in the ISOBMFF specification. The 4CC code 'vspc' could be used to identify this box.

distance_scale indicates a positive scale value which indicates the units corresponding to 1 cm. This unit could be defined to represent 1 meter or any other metric unit.

guard_range_indicator indicates a Boolean value which indicates whether or not a guard range is present in the data structure.

symmetric_range_indicator indicates a Boolean value which indicates that there is range symmetricity in positive and negative axis in the X, Y and Z directions.

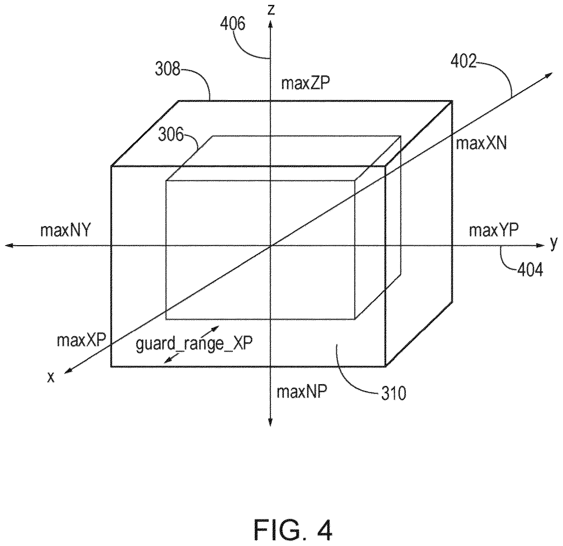

max_XP, max_YP and max_ZP store the maximum range values in positive X,Y and Z axes in distance_scale units. The X, Y, and Z axes are illustarted in Figure 4 as 402, 404 and 406, respecitvely. max_XN, max_YN and max_ZN store the maximum range values in negative X,Y and Z axes, respectively, in distance_scale units. Accordingly, the maximum viewing space region 308 is defined.

guard_range_XP , guard_range_YP and guard_range_ZP indicate the guard range in percentage of the maximum ranges for positive X, Y and Z axes. guard_range_XN, guard_range_YN and guard_range_ZN indicate the guard range in percentage of the maximum ranges for negative X, Y and Z axes, respectively. The guard range 310 is accordingly defined. Since the guard range and the maximum viewing space region are defined, the safe viewing space region 306 could be uniquely derived from the guard range and the maximum viewing space region. Alternatively, one could define the guard range and the safe viewing space region, and the maximum viewing space region could then be uniquely derived. In another embodiment, the safe viewing space region and the guard range are defined and the maximum viewing space region can be uniquely derived. Similarly, any one of the guard range, the maximium viewing space region and the safe viewing space region may be derived given the definition of the other two of the guard range, the maximum viewing space region and the safe viewing space region in the embodiments described below relating to DASH signaling and the VSSample definition.

Such an ISOBMFF compliant file could be segmented for streaming purposes. Each initialization segment may store the VisualSampleEntry containing the VSConfigBox().

In another embodiment, multiple visualsampleentry definitions could be defined to store different VSConfigBox'es. This may be preferred when there is a very limited dynamicity in the VS definitions in time. A scene cut and switching to a new viewing space in the same visual track could be an example for such a use case.

In a DASH streaming scenario, the client has no information about the degrees of freedom that the viewer may have. Moreover, the DASH client may like to make a stream selection based on availability of motion sensors on the viewer's VR setup (e.g., head mounted display or mobile phone). Hence, the VS information may be signaled in the DASH MPD manifest.

In an example embodiment, a new SupplementalProperty or EssentialProperty element; which is semantically defined in DASH specification; may be introduced with a @schemeIdUri attribute equal to "urn:mpeg:mpegI:omaf:2018:vspc". Moreover, a new data structure attribute called ***vsrangeinfo*** may be defined in relevant namespace. In the example below which also includes an example representation, the new property may be signaled using a SupplementalProperty and also the OMAF namespace may be used:

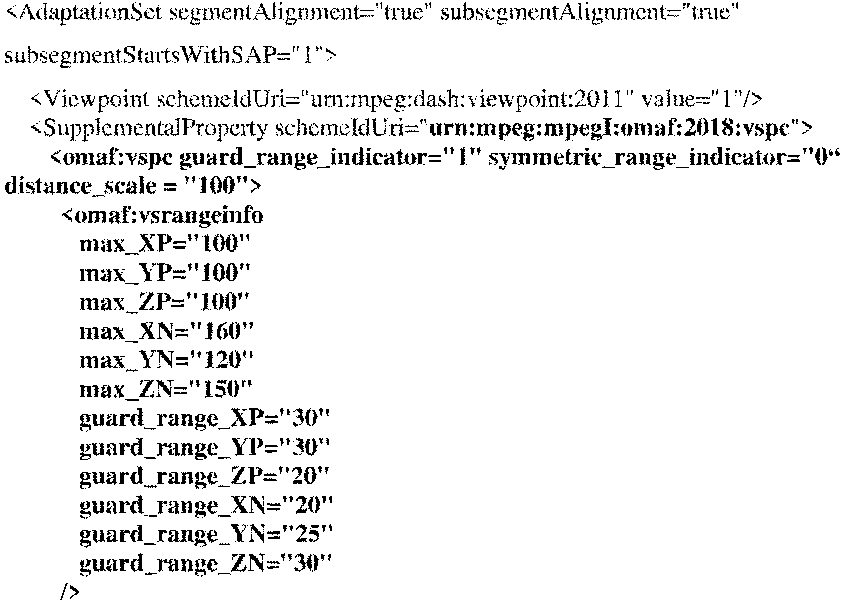

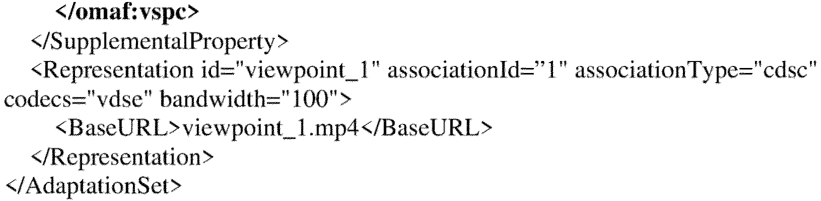

In an example embodiment, the "vspc" attribute defined in the OMAF namespace contains the following fields:

guard_range_indicator indicates a Boolean value which indicates whether or not a guard range is present in the data structure. The value could be "0","1" or "True", "False".

symmetric_range_indicator is a Boolean value which indicates whether there is range symmetricity in positive and negative axis in X, Y, Z directions. The value could be "0","1" or "True", "False". For example, the negative range need not be specified if symmetric, but only if not symmetric, therefore providing some efficiences.

distance_scale indicates a positive scale value which indicates the units corresponding to 1 cm. This unit could be defined to represent 1 meter or any other metric unit.

max_XP, max_YP and max_ZP store the maximum range values in positive X,Y and Z axes, respectively, in distance_scale units. The X, Y, and Z axes are illustarted in Figure 4 as 402, 404 and 406, respectively. max_XN, max_YN and max_ZN store the maximum range values in negative X,Y and Z axes, respecitvely in distance_scale units. Accordingly, the maximum viewing space region 308 is defined.

guard_range_XP , guard_range_YP and guard_range_ZP indicate the guard range in percentage of the maximum ranges for positive X, Y and Z axes, respectively. guard_range_XN, guard_range_YN and guard_range_ZN indicate the guard range in percentage of the maximum ranges for negative X, Y and Z axes, respectively. In another embodiment, the defined property with the URN **"urn:mpeg:mpegI:omaf:2018:vspc"** may be present at the MPD Representation level. In such a case, the representation level VS definition may override any other higher-level VS definitions. The following example shows such a usage:

```
 <AdaptationSet segmentAlignment="true" subsegmentAlignment="true"
 subsegmentStartsWithSAP="1" >
   <Viewpoint schemeIdUri="urn:mpeg:dash:viewpoint:2011" value="2"/>
   <Representation id="viewpoint_2" association!d="360-video-2" associationType="cdsc"
   codecs="vdse" bandwidth=" 100" >
    <BaseURL>viewpoint_2.mp4</BaseURL>
    <SupplementalProperty schemeIdUri="urn:mpeg:mpegI:omaf:2018:vspc">
      <omaf:vspc guard_range_indicator="1" symmetric_range_indicator="0">
        <omaf:vsrangeinfo
          max_XP=" 100"
          max_YP=" 100"
          max_ZP="100"
          max_XN="160"
          max_YN=" 120"
          max_ZN="150"
          guard_range_XP="30"
          guard_range_YP="30"
          guard_range_ZP="20"
          guard_range_XN="20"
          guard_range_YN="25"
          guard_range_ZN="30"
        />
      </omaf:vspc>
    </SupplementalProperty>
  </Representation>
  </AdaptationSet>
```

In another embodiment, the defined viewing space region values may be different for different MPD periods.

In another embodiment, maximum and minimum and guard range values may be applied on principal axis of a three-dimensional ("3D") shape such as (but not limited to) a spheroid or cuboid instead of a Cartesian coordinate system.

For dynamic observation points, temporally changing content may be stored in a sample entry level (for less frequent changing data) or as a timed metadata track (for more frequent changing data as well as data which can be shared between different media tracks) in ISOBMFF. A timed metadata track and/or an viewing space region metadata track is defined. The 'cdsc' track reference may be used to link this metadata track to all relevant tracks in the ISOBMFF compliant file or initialization segment. In another embodiment, a "cdtg" track reference could be used to reference a track group defined in the initialization segment. The "cdtg" track reference may be used e.g. when the timed metadata track describes a group of sub-picture tracks collectively, in which case the sub-picture tracks are indicated to belong to a track group (using the ISOBMFF track group mechanism), and the "cdtg" track reference points to the track group identifier. The "cdsc" track reference may be used, e.g. when a track represents the entire omnidirectional content "natively" and/or by reference, e.g. using an extractor track. A new sample entry called **VSSampleEntry** extending metadata sample entry may be defined as follows:

```
 class VSSampleEntry(type) extends MetaDataSampleEntry("vsps") {
  VSConfigBoxQ; }
  Box[] other_boxes; // optional
```

In this example embodiment, VSConfigBox() may be defined similar to the VSConfigBox() for static observation points. The values defined in this box may indicate the initial values to be sent in the initialization segment.

In another embodiment, all range values could be stripped out and only a subset of EofConfigBox could be stored in VSSampleEntry. Each VS timed metadata sample may be defined as follows:

```
 aligned(8) VSSampleQ {
  ViewingSpaceStruct();
  }
```

All field semantics may be as defined above in *VSStruct* for static observation points. Each VS metadata track may reference one or more visual or audio tracks that have the same VS definition. In another embodiment, as mentioned above with respect to the static observation point VS storage, multiple sample entries that contain different VSConfigBoxes could be defined to store temporally changing VS information in a video or audio track.

In DASH level signaling, each VS timed metadata track may be separately represented as an independent adaptation set in the DASH MPD, mapped to a viewpoint via a viewpoint URI or similar mechanism. Each related media track; which is a representation in the DASH MPD; may be listed in the *associationid* parameter of the Representation element, an example of which follows:

```
 <AdaptationSet segmentAlignment="true" subsegmentAlignment="true"
 subsegmentStartsWithSAP="1" >
   <Viewpoint schemeIdUri="urn:mpeg:dash:viewpoint:2011" value="1"/>
   <Representation id="VS_1" associationid="1" associationType="cdsc" codecs="vsps"
   bandwidth="100">
       <BaseURL>VS_1.mp4</BaseURL>
   </Representation>
  </AdaptationSet>
```

In another embodiment, each VS timed metadata track may be separately represented as an independent adaptation set in the DASH MPD, mapped to a viewpoint via a viewpoint URI or similar mechanism. Each media Representation or Adaptation Set may also be mapped to a viewport with the same or similar mechanism. The timed metadata may be associated with the media Representations or Adaptation Sets based on the same value of viewpoint URI or the like, an example of which follows:

```
 <AdaptationSet segmentAlignment="true" subsegmentAlignment="true"
 subsegmentStartsWithSAP="1" >
   <Viewpoint schemeIdUri="urn:mpeg:dash:viewpoint:2011" value="1"/>
   <Representation id="VS_1" codecs="vsps" bandwidth="100"
   mimeType="application/mp4" >
       <BaseURL>VS_1.mp4</BaseURL>
   </Representation>
  </AdaptationSet>
  <AdaptationSet segmentAlignment="true" subsegmentAlignment="true"
  subsegmentStartsWithSAP="1" >
   <Viewpoint schemeIdUri="urn:mpeg:dash:viewpoint:2011" value="1"/>
   <Representation id="media_1" codecs="resv.erpv.hvc1" bandwidth="100"
   mimeType="video/mp4" >
       <BaseURL>media_1.mp4</BaseURL>
   </Representation>
  </AdaptationSet>
```

In another embodiment, a DASH descriptor is defined to reflect a track group, where the @ schemeIdUri value may be indicative of a track group (or a respective Representation group) and @value may comprise track_group_type and the payload of the respective TrackGroupTypeBox. It is noted that other approaches that are similarly descriptive could be used, e.g. by including the track_group_type and/or track_group_id as a part of the URI used within @ schemeIdUri.

When an @associationId does not refer to a Represenation@id, referance may be made to a track_group_id or any other identifier of the track group (or the respective Representation group) that is given as provided in the above description of the DASH descriptor.

Assuming that there is a Representation with id "1" that represents the entire content and a sub-picture track group with id "2" defined in the MPD as described above, the associationId and associationType may be set as follows:

```
 <AdaptationSet segmentAlignment="true" subsegmentAlignment="true"
 subsegmentStartsWithSAP="1" >
   <Viewpoint schemeIdUri="urn:mpeg:dash:viewpoint:2011" value="1"/>
   <Representation id="VS_1" associationId="1 2" associationType="cdsc cdtg"
   codecs="vsps" bandwidth=" 100" >
       <BaseURL>VS_1.mp4</BaseURL>
   </Representation>
  </AdaptationSet>
```

In DASH level signalling, when an extractor track is used as defined in OMAF specification, it may be sufficient to list only the related extractor track in the *associationid* parameter and not list the related sub-picture tracks. Viewing space regions can be non-cubic, such as spherical, etc. In such a case, a principle axis based definition may be utilized such as a cuboid with 3 orthogonal vectors, a sphere with a radius only or equal maxX, maxY, maxZ values, equal guard ranges and equal safeX,safeY,safeZ values, or a spheroid with two orthogonal vectors or maxX, maxY, maxZ values configured such that at least one pair of such values are equal. For such shapes, a "shape_indicator" field may be added to the VSConfigBox() and VSSample. In this example embodiment, shape_indicator may be an enumerated list of values indicating the main 3D shape to apply the other parameters. The value of the shape_indicator field could be an 8 bit unsigned integer.

In another embodiment, guard range and maximum range symmetricity could be different. In such a case, guard_range and symmetry _indicator could be defined for each volume-indicating shape, such as a maximum range or safe-range.

In another embodiment, a transition_indicator could be added to the data structures with the guard_range in order to signal the transition effect. In this example embodiment, the transition_indicator may be an enumerated list of values indicating a transition effect to be applied for the guard_region. The enumerated list may for example comprise but is not limited to the following entries: 0: No effect; 1: fade out to black; 2: blend with another view, and the like.

In the OMAF specification, a media content may contain an initial viewing orientation information and/or a recommended viewport information. Both information may be stored and signaled as timed metadata information. In order to support viewing space of the viewer inside the provided degrees of freedom, the following definitions in OMAF specification could be extended:

SphereRegionSample could be extended as follows:

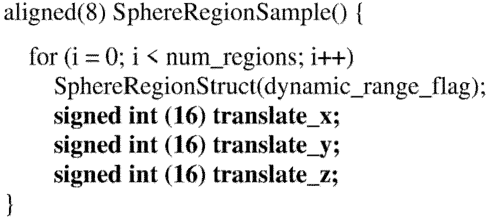

translate_x, translate_y, and translate_z indicate translation values in X,Y and Z directions, respectively, from the center of the viewpoint in either the initially provided viewing direction vector or the default viewing direction vector. The unit scale could be the distance_scale value as defined previously at either the sample entry level or the sample level. In another embodiment, distance_scale could also be part of the SphereRegionSample data structure.

In another embodiment, such translational values could be defined inside the SphereRegionStruct():

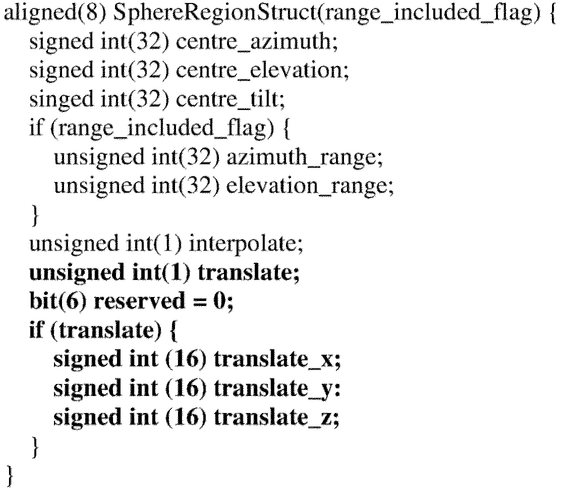

translate field indicates that there is X,Y,Z translational information in the data structure. translate_x, translate_y, and translate_z indicate translation values in X,Y and Z directions, respectively, from the center of the viewpoint in either the intial viewing direction vector or the default viewing direction vector. The unit scale could be the distance_scale value as defined previously at either the sample entry level or the sample level. In another embodiment, distance_scale could also be part of the SphereRegionStruct data structure.

In another embodiment, InitialViewingOrientationSample() could be extended as follows:

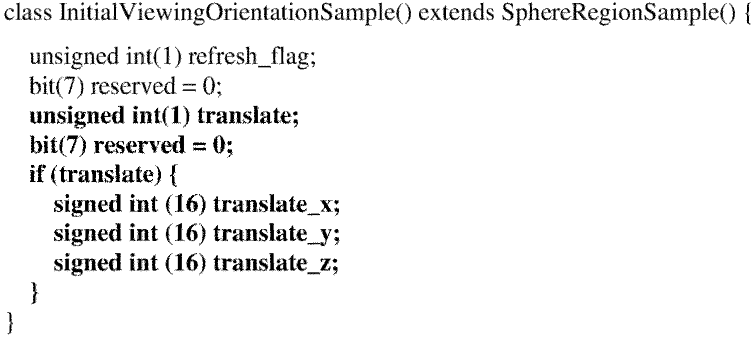

Alternatively, InitialViewingOrientationSample() could be extended in the following form:

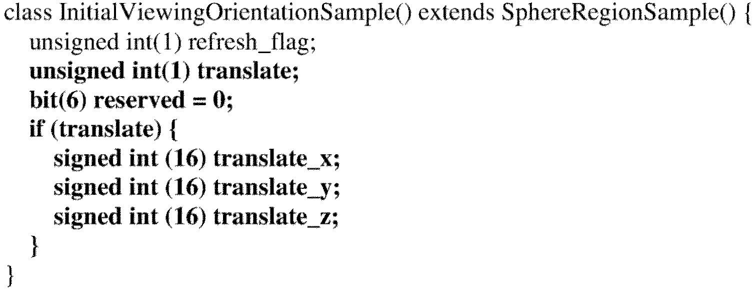

translate field indicates that there is X,Y,Z translational information in the data structure. translate_x, translate_y, and translate_z indicate translation values in X,Y and Z directions, respectively, from the center of the viewpoint in the intial viewing direction vector or the default viewing direction vector. The unit scale could be the distance_scale value as defined previously at either the sample entry level or the sample level. In another embodiment, distance_scale could also be part of the InitialViewingOrientationSample() data structure.

From the above alternatives, it is noted that extending the definition of InitialViewingOrientationSample provides for better backwards compatibility.

The implementation section using the MPEG DASH and ISOBMFF is given to illustrate an example and it is not restrictive of the patent application applicability. Other embodiments could be implemented using any other protocol at any layer of the ISO OSI (Open Systems Interconnection) stack. For instance, the same signaling could be carried over RTSP (Real Time Streaming Protocol), SIP (Session Initiation Protocol), SDP (Session Description Protocol), RTP (Real-time Transport Protocol), HTTP (without DASH) protocols and the like.

In another embodiment, the signaling and/or storage is via an edge server or cache server, which is located in between the origin server and the client(s).

In another embodiment, a different architecture could be envisaged, in addition to the typical DASH-based client-server architecture for delivery. For example, the architecture could be point-to-point conversational, or point-to-multipoint (multicast or broadcast), peer-to-peer, to name a few possible delivery architectures.

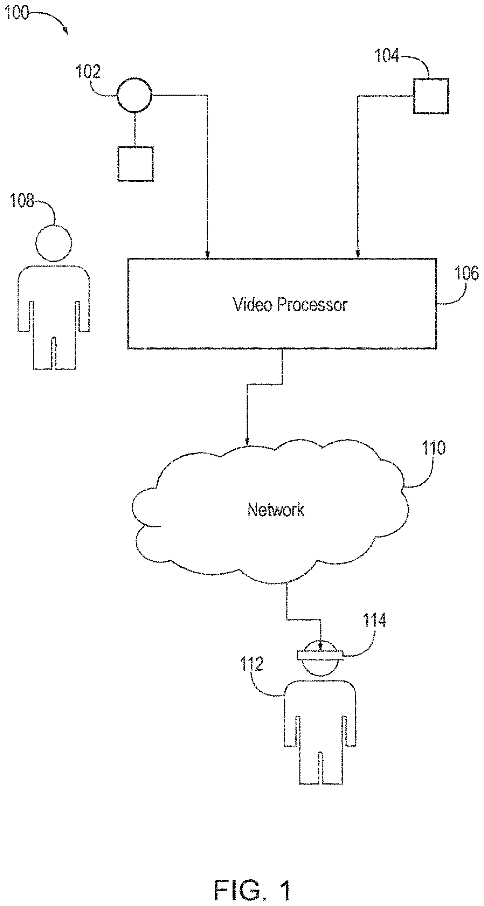

Figure 1 depicts an example system environment 100 in which implementations in accordance with an example embodiment of the present invention may be performed. The depiction of environment 100 is not intended to limit or otherwise confine the embodiments described and contemplated herein to any particular configuration of elements or systems, nor is it intended to exclude any alternative configurations or systems for the set of configurations and systems that can be used in connection with embodiments of the present invention. Rather, Figure 1, and the environment 100 disclosed therein is merely presented to provide an example basis and context for the facilitation of some of the features, aspects, and uses of the methods, apparatuses, and computer program products disclosed and contemplated herein. It will be understood that while many of the aspects and components presented in Figure 1 are shown as discrete, separate elements, other configurations may be used in connection with the methods, apparatuses, and computer programs described herein, including configurations that combine, omit, and/or add aspects and/or components.

As shown in Figure 1, system environment 100 includes at least one camera 102. Many implementations of system environment 100 contemplate the use of one or more cameras that are suitable for capturing 360° video images for use in the production of virtual reality content, such as Nokia's OZO system, and/or other cameras or camera arrays that can be used to create 360° video images and/or other panoramic views. Figure 1 also contemplates the existence of one or more media sources 104, which may be a database, other device and/or other system which allows for the transmission and/or access of audiovisual content that has been previously captured or otherwise generated.

As shown in Figure 1, camera 102 and media source 104 are capable of and/or configured to transmit images and/or other audiovisual content, such as 360° video images, as a data stream. Such transmission can be accomplished in accordance with any approach and/or protocol that is suitable for transmitting image data from a camera to one or more devices. In some implementations, transmissions of image data are sent wirelessly or over a wired connection, in real time or near real time, to one or more devices configured to receive and/or process video images.

As shown in Figure 1, camera 102 and media source 104 may transmit their respective video image streams to a video processor 106. Video processor 106 is representative of any of a class of devices that may be implemented as stand-alone devices and/or devices that may be integrated into other devices or components. As shown in Figure 1, video processor 106 is configured to receive the image data streams and any related information from each of camera 102 and media source 104. In some example implementations, video processor 106 is also configured to permit the selection and/or identification of one or more saliency points in a video stream. In some example embodiments, video processor 106 embeds information indicative of that saliency point into the video stream or a separate stream (or a signaling structure, such as Media Presentation Description) associated with the video stream. In some example embodiments, video processor 106 regards that saliency point as an indication associated with an intended behavior of a playback device, determines the intended behavior of the playback device, and in response to determining the intended behavior of the playback device, causes a control signal to be generated, wherein the control signal is associated with a rendering operation of the audiovisual presentation on the playback device. Said control signal may for example be included in a video stream or be included in description of a video stream.

Director 108 is shown as an optional operator of video processor 106, and, in some implementations, is capable of monitoring and/or controlling one or more image data streams during the production and/or streaming of the image data streams. In some example embodiments director 108 causes information indicative of a saliency point to be embedded into a particular location in a video stream. In some example embodiments director 108 determines the intended behavior of the playback device and causes a control signal to be generated, wherein the control signal is associated with a rendering operation of the audiovisual presentation on the playback device. Said control signal may for example be included in a video stream or be included in description of a video stream. Director 108 may additionally or alternatively make creative decisions regarding the content presented in a video stream, and the relative arrangement of subjects, background elements, and other objects within the work. As noted above, the director 108 is optional in environment 60, and implementations are possible where one or more saliency points are embedded in a video stream by video processor 106, the action of some other device, or otherwise without the presence of or action by a director or other entity.

As depicted in Figure 1, video processor 106 sends audiovisual content over a network 110. It will be understood that the actual sending apparatus may be a different entity from a video processor entity but that these entities are operationally connected and hence depicted as a single video processor 106. The sending apparatus may for example be an HTTP server (such as a web server, for example) in some embodiments. Network 110 may be any network suitable for the transmission of 360° video and related orientation information, directly and/or indirectly, from one or more devices, such as video processor 106, to a viewing device, such as virtual reality headset 114. While a viewing device is depicted as a single apparatus in Figure 1, it will be understood that a viewing device may generally comprise several devices that are operationally connected. For example, a virtual reality headset may be connected to a computer that receives the audiovisual content over the network 110. In another example, a virtual reality headset uses as its display device a smartphone that is attached to the headset and receives the audiovisual content over the network 110. In some implementations, the network 110 includes and/or incorporates the public Internet.

Figure 1 also depicts a user 112, who is associated with a viewing device, such as virtual reality headset 114. In general, virtual reality headset 114 is capable of receiving one or more data streams, such a one or more 360° image data streams (along with the corresponding orientation information), and rendering visible images that can be displayed to the user 112. In some implementations, virtual reality headset 114 is also capable of ascertaining positional information about the user 112, such as the angle and/or degree to which the user 112 has turned his or her head, and other information about the movement of the user 112 or the user 112's head. While Figure 1 depicts user 112 as viewing content via a virtual reality headset 114, the user may view content via any viewing system that is configured to display all or part of the video transmitted to the user. For example the user may use one or more monitors, mobile device, and/or other handheld or desktop displays to view content. When the display is configured to display part of the 360° content at any single point of time, the user 112 may be given controls which part of the content is displayed. For example, the user 112 may be able to control the viewing direction e.g. using a keyboard, joystick, mouse or any other input peripheral or by rotating or turning the display device, such as a smartphone. The user may also move translationally and audiovisual content presented may be adjusted accordingly.

In an embodiment, statistics on users' viewing behavior of a VR video clip are collected. For example, a player may report the viewing directions or orientation (e.g., the orientation of the virtual reality headset 114 with respect to its initial orientation at the start of playing the clip) as a function of media time of the clip to a server collecting the statistics. By collecting the reported viewing directions, the most probable viewing direction (MPVD) may be formed as a function of media time of the clip. The MPVD may be understood to indicate the direction or the region that is statistically most likely rendered to users. The MPVD may be provided to the director 108 as input for assisting creative decisions. Alternatively, the MPVD may be used as such by the video processor 106 as a saliency point to be embedded into a particular location in a video stream. Alternatively, the video processor 106 regards the MPVD as an indication associated with an intended behavior of a playback device, determines the intended behavior of the playback device, and in response to determining the intended behavior of the playback device, causes a control signal to be generated, wherein the control signal is associated with a rendering operation of the audiovisual presentation on the playback device. This embodiment enables the viewing behavior of an initial set of users to assist in or determining the selection of saliency points and hence improving the viewing experience of subsequent users.

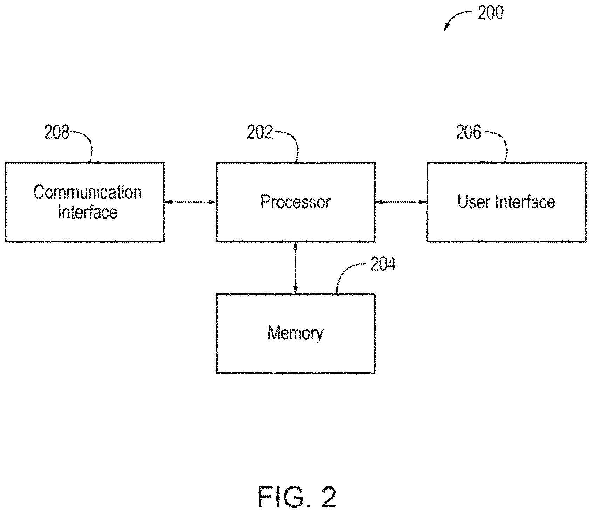

Based at least in part on an initial observation setup associated with a portion of audiovisual content and a set of conditions associated with that initial observation setup, the audiovisual content can be rendered in a manner that takes into account the position of a user and creative choices made by a content creator when rendering content to a viewer. In this regard, the observation point and orientation selection for audiovisual content can be controlled by an apparatus 200 as depicted in Figure 2. The apparatus may be embodied by any of the cameras 102, media sources 104, or any of the other devices discussed with respect to Figure 1, such as video processor 106, and/or devices that may be incorporated or otherwise associated with network 110. Alternatively, the apparatus 200 may be embodied by another computing device, external to such devices. For example, the apparatus may be embodied by a personal computer, a computer workstation, a server or the like, or by any of various mobile computing devices, such as a mobile terminal, e.g., a smartphone, a tablet computer, a video game player, etc. Alternatively, the apparatus may be embodied by a virtual reality system, such as a head mounted display such as virtual reality headset 114.

Regardless of the manner in which the apparatus 200 is embodied, the apparatus of an example embodiment is configured to include or otherwise be in communication with a processor 202 and a memory device 204 and optionally the user interface 206 and/or a communication interface 208. In some embodiments, the processor (and/or co-processors or any other processing circuitry assisting or otherwise associated with the processor) may be in communication with the memory device via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

As described above, the apparatus 200 may be embodied by a computing device. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processor 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In some embodiments, the apparatus 200 may optionally include a user interface 206 that may, in turn, be in communication with the processor 202 to provide output to the user and, in some embodiments, to receive an indication of a user input. As such, the user interface may include a display and, in some embodiments, may also include a keyboard, a mouse, a joystick, a touch screen, touch areas, soft keys, a microphone, a speaker, or other input/output mechanisms. Alternatively or additionally, the processor may comprise user interface circuitry configured to control at least some functions of one or more user interface elements such as a display and, in some embodiments, a speaker, ringer, microphone and/or the like. The processor and/or user interface circuitry comprising the processor may be configured to control one or more functions of one or more user interface elements through computer program instructions (e.g., software and/or firmware) stored on a memory accessible to the processor (e.g., memory device 204, and/or the like).

The apparatus 200 may optionally also include the communication interface 208. The communication interface may be any means such as a device or circuitry embodied in either hardware or a combination of hardware and software that is configured to receive and/or transmit data from/to a network and/or any other device or module in communication with the apparatus. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

Some example implementations contemplate a playback mode condition. A playback mode condition may be pre-defined e.g. in a standard or may be indicated e.g. by a video processor 106 in a video stream or a description of a video stream. A playback mode condition may indicate the playback modes for which the initial observation setup applies and/or the playback modes for which the initial observation setup does not apply. Playback modes may comprise but are not limited to continuous playback, seek or random access for initiating continuous playback, fast forward play in which e.g. only intra-coded pictures are played, fast backward play in which e.g. only intra-coded pictures are played. A playback mode condition may enable the content author to indicate that the observation setup is reset when seeking for initiating continuous playback but is not reset for fast forward or backward play, or vice versa.

Some example implementations also contemplate additional signaling options. In one such example implementation, the approach to providing timed audiovisual content intended for user-driven selective rendering may be characterized by: indicating an initial observation setup within a syntax structure; and indicating, in the syntax structure, if the initial observation setup applies unconditionally when random accessing In another example implementation, the approach to accessing audiovisual content intended for user-driven selective rendering may be characterized by: parsing an initial observation setup from a syntax structure; and parsing, from the syntax structure, if the initial observation setup applies unconditionally when random accessing. In another example implementation, the syntax structure may be included in or parsed from a presentation layer, such as SMIL or HTML5 or presentation information included therein (e.g. cascaded style sheets). In an embodiment, the syntax structure is an element in a markup language, such as HTML5. In another example implementation, the syntax structure may be included in or parsed from a presentation description or a streaming manifest, such as DASH MPD or SDP (Session Description Protocol).

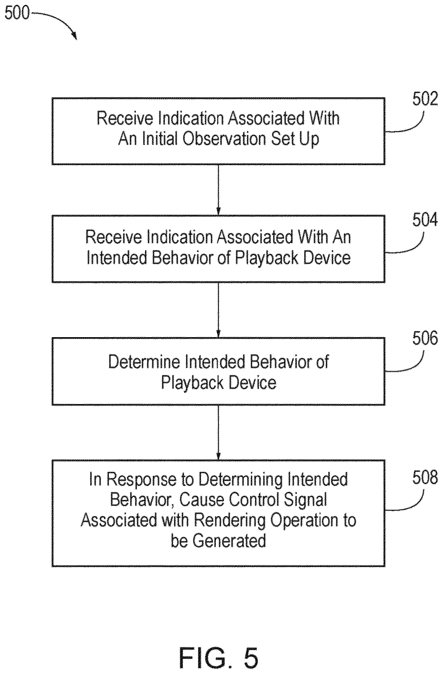

Referring now to Figure 5, the operations performed by the apparatus 200 of Figure 2 in accordance with the present invention are depicted as an example process flow 500. In this regard, the apparatus includes means, such as the processor 202, the memory 204, the communication interface 208 or the like, for receiving an indication associated with an initial observation setup of a set of transmission units of an audiovisual presentation; receiving an indication associated with an intended behavior of a playback device; determining the intended behavior of the playback device; and in response to determining the intended behavior of the playback device, causing a control signal to be generated, wherein the control signal is associated with a rendering operation of the audiovisual presentation on the playback device. As such, the apparatus is generally capable of effecting the controlled observation and orientation selection for audiovisual content discussed and otherwise contemplated herein.

The apparatus includes means, such as the processor 202, the memory 204, the communication interface 208 or the like, for receiving an indication associated with an initial observation setup of a set of transmission units of an audiovisual presentation. With reference to Figure 5, process flow 500 commences at block 502 with receiving an indication associated with an initial observation setup. In some example implementations of process flow 500, the observation point is associated with a 3D viewing space region. In some example implementations, the observation point is associated with a viewing space region because all audiovisual content corresponding to the observation point is associated with a data entry defining the viewing space region. The 3D viewing space region may comprise a safe viewing space region and a maximum viewing space region. The 3D viewing space region may also comprise a guard range between the safe viewing space region and the maximum viewing space region. Transition effects may be implemented in a subset of the audiovisual presentation in the guard range.

The apparatus also includes means, such as the processor 202, the memory 204, the communication interface 208 or the like, for receiving an indication associated with an intended behavior of a playback device. With reference to Figure 5, process flow 500 continues at block 504 with receiving an indication associated with the intended behavior of a playback device. In general, for many example implementations, the indication associated with intended behavior of a playback device allows for a determination of the "strength" of a content creator's preference that certain content be rendered in a particular manner, and contemplates conditions under which a viewer's positioning (such as the position of the user's head, or other orientation of a viewing device, for example) may override the content creator's preferences. In some example implementations of block 504, the intended behavior of the playback device includes, upon the satisfaction of a condition, setting the observation setup to the initial observation setup. In some example implementations of block 504, the indication associated with the intended behavior of the playback device comprises an indication associated with an intended behavior of the playback device under a continuous playback mode of the playback device and an indication associated with an intended behavior of the playback device under a random access mode of the playback device. As such, some example implementations of block 604 contemplate a degree of situational behavior of the playback device, in the sense that content may be rendered in one manner when in a continuous playing mode, while content may be rendered in another manner when a segment or subsegment of content is randomly accessed.

The apparatus includes means, such as the processor 202, the memory 204, the communication interface 208 or the like, for determining the intended behavior of the playback device. With reference to Figure 5, process flow 500 continues at block 506 with determining the intended behavior of the playback device. In some example implementations of block 506, determining the intended behavior of the playback device comprises determining whether a condition associated with the intended behavior of the playback device has been met. Some example implementations contemplate scenarios involving an indication that an initial observation setup (1) does not apply, (2) applies conditionally, or (3) applies unconditionally in continuous playback. Likewise, some such example implementations and other example implementations contemplate scenarios involving an indication that an initial observation setup (1) does not apply, (2) applies conditionally, or (3) applies unconditionally when random accessing of the segment or subsegment occurs.

In some example implementations, the condition comprises at least one reset condition associated with the initial observation setup. For example, a reset condition may be met that causes the initial observation setup to apply. In such example implementations, the reset condition may take the form of a reset range of observation points and/or observation orientations that cause the initial observation setup to apply. Moreover, in some implementations, the reset condition may be based at least in part on a present observation setup.

In some such example implementations, and in other example implementations, the condition comprises at least one sustaining condition associated with the initial observation setup, such as, for example, a sustaining condition that causes the initial observation setup to not apply. In such example implementations, the sustaining condition may include a sustaining range indicative of observation points and/or observation orientations that cause the initial observation setup to not apply.

The apparatus includes means, such as the processor 202, the memory 204, the communication interface 208 or the like, for in response to determining the intended behavior of the playback device, causing a control signal to be generated, wherein the control signal is associated with a rendering operation of the audiovisual presentation on the playback device. With reference to Figure 5, process flow 500 continues to block 508, which includes, in response to determining the intended behavior of the playback device, causing a control signal associated with a rendering operation to be generated. In some example implementations of block 508, the control signal is indicative of the intended behavior of the playback device. In some example implementations of block 508, the rendering operation of the audiovisual presentation on the playback device comprises selecting a portion of the audiovisual presentation. As discussed throughout herein, implementations of process 500 and other embodiments of the invention contemplate whether, and to what degree, the content presented to a viewer should be rendered such that the relative positioning of the content with respect to the viewer is realigned and/or shifted based on the initial observation setup associated with a segment or subsegment of content, the orientation of the viewing device, and/or the manner in which the segment or subsegment is encountered (continuous playback or random accessing, for example). In some example implementations of block 508, upon determining the intended behavior of the playback device (based, for example, on a determination of that a condition associated with the application of the initial observation setup has been met), a control signal may be generated that directly or indirectly causes content to be rendered in the intended manner and presented to the viewer.

It will be appreciated that some implementations of process 500, and other embodiments of the invention described herein, contemplate the repeated determining of the intended behavior of the playback device. For example, some example implementations contemplate a first observation setup identifier associated with a first set of transmission units of audiovisual content, and a second observation setup identifier for a second set of transmission units. In some such example implementations, a transmission unit may be defined by one or more Adaptation Set, Representation, Subrepresentation, set of segments, set of subsegments, and/or a time range. These different transmission units may be associated with different reset conditions and/or sustaining conditions, such that the intended behaviors for the separate transmission units differ. Moreover, the conditions associated with the separate transmission units may be correlated or otherwise linked, such that the conditions and/or intended behavior associated with one transmission unit are based at least in part on the conditions and/or intended behavior associated with the other transmission unit.

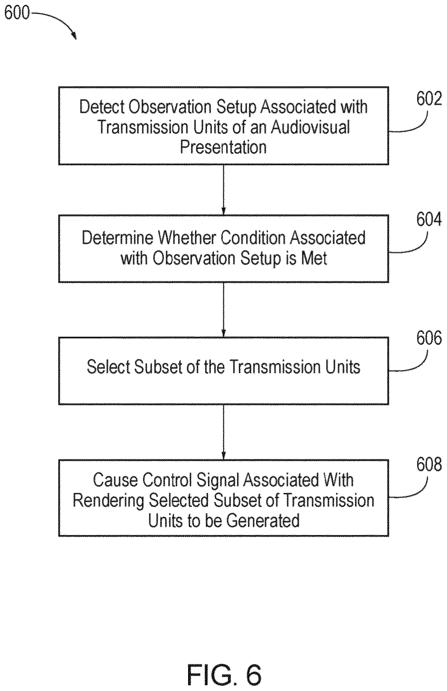

Referring now to Figure 6, another set of operations performed by the apparatus 200 of Figure 2 in accordance with the present invention are depicted as an example process flow 600. It will be appreciated that some example implementations of process flow 600 may be particularly advantageous in embodiments that arise within and/or are performed by a viewing device, such as virtual reality headset 114 for example. In this regard, the apparatus includes means, such as the processor 202, the memory 204, the communication interface 208 or the like, for detecting an observation setup associated with a set of transmission units of an audiovisual presentation. With reference to Figure 6, process flow 600 commences at block 602 with detecting an observation setup associated with transmission units of an audiovisual presentation. Detecting the observation setup may be done in accordance with any of a number of approaches, depending on how the observation setup is received, which may in turn be dependent upon the protocols and formats associated with the audiovisual presentation and the transmission thereof. It will be appreciated that any of media formats and protocols discussed and/or contemplated herein may be used in implementations of process 600 and block 602.

In some example implementations of process flow 600, the observation point is associated with a 3D viewing space region. In some example implementations, the observation point is associated with a viewing space region because all audiovisual content corresponding to the observation point are associated with a data entry defining the viewing space region. The 3D viewing space region may comprise a safe viewing space region and a maximum viewing space region. The 3D viewing space region may also comprise a guard range between the safe viewing space region and the maximum viewing space region. Transition effects may be implemented in a subset of the audiovisual presentation in the guard range.

The apparatus also includes means, such as the processor 202, the memory 204, the communication interface 208 or the like, for determining whether a condition associated with the observation setup is met. With reference to Figure 6, process flow 600 continues at block 604 with determining whether a condition associated with the observation setup is met. As discussed herein, many example implementations of embodiments of the invention contemplate controlling the observation point and orientation selection associated with audiovisual content based on aspects of the content (such as an orientation setup, MPVD, and/or other information about the content) and/or other factors, such as the positioning of a viewer and/or viewing device, the context in which the user encounters a particular segment or subsegment of content, and/or other factors, and responsively displaying content to the viewer in a particular manner. In some example implementations of block 604, determining whether a condition associated with the observation setup is met comprises determining an orientation associated with the playback device. For example, a playback device, such as virtual reality headset 114, for example, may be configured to detect and provide information associated with the absolute and/or relative positioning (including but not limited to the roll, pitch, and yaw and/or viewing angle) of the playback device, the user, or both. In some example implementations, determining whether a condition associated with the playback device is met comprises determining whether the playback device is in a continuous playback mode and/or whether the playback device is in a random access mode. As discussed herein, whether or not a particular observation setup is applied in a given situation may be sensitive to whether the user has randomly accessed a particular portion of an audiovisual presentation, or has encountered that same portion by viewing previous portions continuously, in order to provide the desired viewing experience to the viewer.

The apparatus also includes means, such as the processor 202, the memory 204, the communication interface 208 or the like, for, in response to determining whether a condition associated with the observation is met, selecting a subset of the transmission units of an audiovisual presentations. With reference to Figure 6, process flow 600 continues at block 606 with selecting a subset of the transmission units. With reference to Figures 3, 4, and 5 and the discussions related thereto, upon receiving an observation setup and determining whether any condition or conditions associated with the observation setup are met, one or more portions or views associated with the audiovisual presentation can be selected for display to the user. Any of the approaches to identifying and/or selecting the views to be presented discussed and/or contemplated herein may be used in example implementations of block 606.

The apparatus also includes means, such as the processor 202, the memory 204, the communication interface 208 or the like, for, causing a control signal to be generated, wherein the control signal is associated with a rendering operation of the selected subset of the transmission units of the audiovisual presentation on the playback device. With reference to Figure 6, process flow 600 continues at block 608 with causing a control signal associated with rendering the selected subset of the transmission units to be generated. In some example implementations of block 608, the control signal includes an indication of an intended behavior of a playback device. For example, upon determining whether any conditions associated with the observation setup are met and selecting one or more views to be displayed, the apparatus may generate a control signal that instructs and/or otherwise causes a viewing device, such as virtual reality headset 114, for example, to render the selected content in a particular, intended manner. For example, in situations where the received observation setup is to be applied, the control signal may be generated in a manner that can be recognized and processed by the rendering process and/or the viewing device to render the content in accordance with that observation setup. Similarly, in situations where the received observation setup is not to be applied, a control signal may be generated to confirm to the rendering process and/or the viewing device that the views rendered to the viewer should not be impacted by the received observation setup.

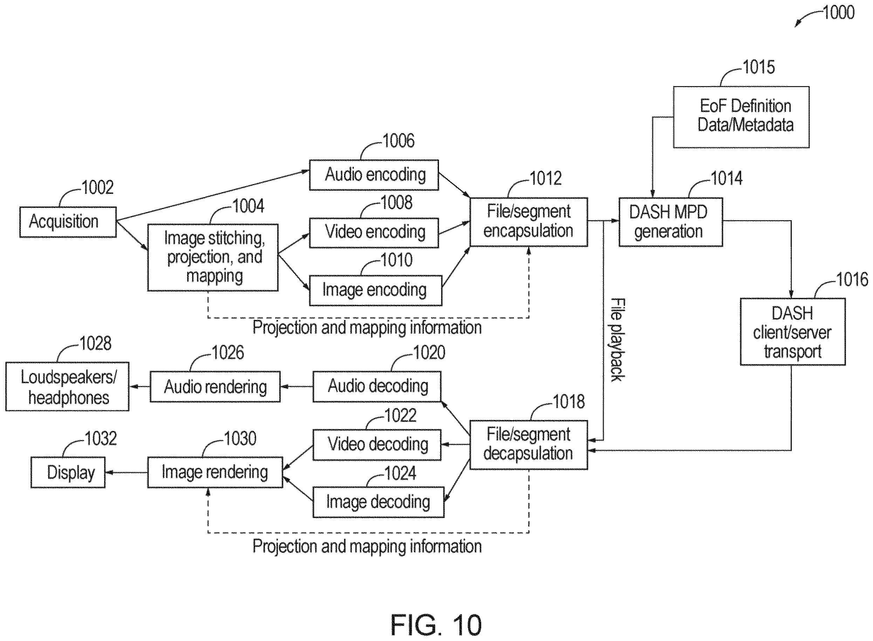

In an example, virtual reality content may be processed in accordance with example process 1000 as illustrated in Figure 10 or in accordance with subsets and/or variants thereof. As shown, in Figure 10, virtual reality content is acquired at block 1002, such as by one or more virtual reality cameras, other camera arrays, and/or other audiovisual equipment suitable for capturing virtual reality content. As shown in Figure 10, images acquired at block 1002 may be passed to block 1004, where a processor 202 is configured to perform image stitching, projection, and mapping. Audio acquired at block 1002 may be, in some implementations, passed to block 1006 for the processor to perform audio encoding, while the stitched, projected, and mapped images from block 1004 may be passed to block 1008 and/or block 1010 for the processor to perform video and/or image encoding. As depicted at block 1012 in Figure 10, the processor or other file encapsulator is configured to take the encoded media content including video, image, and audio from blocks 1006, 1008 and 1010 as input and encapsulate them into a container file. The processor or other file encapsulator may also be configured to receive and incorporate metadata into the file, such as projection and mapping information assisting in rendering the decoded packed VR frames. In implementations involving DASH, as shown in Figure 10, the processor other other DASH MPD generator is configured to take the file as input and generate at block 1014 an MPD, which may include VR-specific metadata such as projection and mapping metadata that can be generated on the basis of the equivalent information in the file. Further, the DASH MPD generation at block 1014 includes generation by the processor of viewing space definition data directly stored in the audiovisual track or separately provided as timed metadata track as illustrated in block 1015. After DASH MPD generation at block 1014, DASH client/server transport is performed at block 1016, such as by the processor, the communication interface 208 or the like.

As shown at block 1018 in Figure 10, during file playback, the processor 202 or other file decapsulator is configured to process the file and/or the received (Sub)Segments, extract the coded bitstreams from tracks and parse the metadata including the viewing space definition data. Audio information, video information, and image information are decoded by the processor at blocks 1020, 1022, and 1024, respectively. The decoded packed VR frames generated by block 1022 and/or 1024 may be rendered by the processor, user interface 206 or the like at block 1030, which optionally involves the use of projection and/or mapping information received from the file decapsulator. As shown at block 1032, the rendered images are projected by the processor, the user interface or the like onto the screen of a head-mounted display or any other display device based on the current viewing orientation and the projection and mapping metadata parsed from the file. Similarly, audio that is rendered at block 1026 may be output at block 1028 by the processor, user interface or the like via loudspeakers and/or headphones.

As described above, Figure 5 and Figure 6 illustrate flowcharts of an apparatus, method, and computer program product according to the invention. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory device 204 of an apparatus employing an embodiment of the present invention and executed by the processor 202 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Some embodiments have been described herein with reference to 360° video. As used herein, the term 360° video should be understood to cover any projection format. Moreover, while in some implementations, a 360° field of view is contemplated, example implementations may be used in connection with other fields of view, including but not limited to fields of view with coverage other than 360°, and may generally be less than that, without departing from the scope of the embodiments described herein.

In the above, some embodiments have been described in relation to ISOBMFF and/or formats derived from ISOBMFF. However, many example embodiments similarly apply to other file and segment formats, including but not limited to the Matroska file format.

In the above, some embodiments have been described in relation to HTTP and/or HTTP GET requests. It needs to be understood that embodiments are not limited to the use of HTTP, but other protocols, such as WebSockets, may be used instead or additionally. Likewise, different versions of HTTP may be used, such as HTTP/1.1 or HTTP/2. Likewise, HTTPS may be used. It also needs to be understood that the invention may be applied in cases where no requests, such as HTTP GET, are made by a client, e.g. when a client receives data through a broadcast, such as a broadcast service according to 3GPP Multimedia Broadcast/Multicast Service (MBMS).

In the above, some embodiments have been described in relation to MPEG-DASH or DASH. However, example implementations and embodiments similarly apply to other forms of streaming over HTTP, such as the Apple HTTP Live Streaming (HLS), for example. It should be understood that DASH-specific terminology in embodiments can be adjusted to similar terms in other streaming formats and systems.

In the above, some embodiments have been described in relation to Media Presentation Description (MPD) of MPEG-DASH. However, example implementations and embodiments similarly apply to other streaming manifest formats, such as the HLS M3U format, or other stream or presentation description formats, such as SDP, for example.

Additionally, while described in conjunction with three dimensions, such as a three dimensional viewing space region, other embodiment may be extended to additional dimensions, such as four or more dimensions.

## Claims

1. A method comprising:
receiving (502) an indication associated with an initial observation setup of a set of transmission units of an audiovisual presentation comprising virtual reality audiovisual content, wherein the initial observation setup comprises at least one observation point associated with a three dimensional (3D) viewing space region (802);
receiving (504) an indication associated with an intended behavior of a playback device (114) with respect to the initial observation setup;
determining (506) whether a condition associated with the intended behavior of the playback device (114) with respect to the initial observation setup is met; and
in response to determining whether the condition associated with the intended behavior of the playback device (114) is met, causing (508) a control signal to be generated, wherein the control signal is associated with a rendering operation of the audiovisual presentation on the playback device (114),
**characterised in that** the 3D viewing space region (802) comprises a safe viewing space region (308) and a maximum viewing space region (310) where the virtual reality visual content would be responsive to the viewer's translational movement, and a guard range (312) between the safe viewing space region (308) and the maximum viewing space region (310) where the best or fully optimized viewing experience is not guaranteed, wherein the method comprises
implementing visual effects in a subset of the audiovisual presentation within the guard range (312).

2. A method according to claim 1, wherein the at least one observation point associated with a 3D viewing space region (802) comprises at least one static observation point.

3. A method according to claim 1, wherein the at least one observation point associated with a 3D viewing space region (802) comprises at least one dynamic observation point.

4. An apparatus (200) comprising:
means (202, 204, 208) for receiving an indication associated with an initial observation setup of a set of transmission units of an audiovisual presentation comprising virtual reality audiovisual content, wherein the initial observation setup comprises at least one observation point associated with a three dimensional (3D) viewing space region (802);
means (202, 204, 208) for receiving an indication associated with an intended behavior of a playback device (114);
means (202, 204, 208) for determining the intended behavior of the playback device (114); and
in response to the means (202, 204, 208) for determining the intended behavior of the playback device (114), causing a control signal to be generated, wherein the control signal is associated with a rendering operation of the audiovisual presentation on the playback device (114),
**characterized in that**
the 3D viewing space region (802) comprises a safe viewing space region (308) and a maximum viewing space region (310) where the virtual reality visual content would be responsive to the viewer's translational movement, and a guard range (312) between the safe viewing space region (308) and the maximum viewing space region (310) where the best or fully optimized viewing experience is not guaranteed, and wherein the apparatus (200) comprises
means for implementing visual effects in a subset of the audiovisual presentation within the guard range (312).

5. An apparatus (200) according to claim 4, wherein the at least one observation point associated with a 3D viewing space region (802) comprises at least one static observation point.

6. An apparatus (200) according to claim 4, wherein the at least one observation point associated with a 3D viewing space region (802) comprises at least one dynamic observation point.

7. A method comprising:
detecting (602) an observation setup associated with a set of transmission units of an audiovisual presentation comprising virtual reality audiovisual content, wherein the observation setup comprises at least one observation point associated with a three dimensional (3D) viewing space region (802);
in response to detecting (604) whether a condition associated with the observation setup is met, selecting (606) a subset of the transmission units of the audiovisual presentation; and
causing (608) a control signal to be generated, wherein the control signal is associated with a rendering operation of the selected subset of the transmission units of the audiovisual presentation on a playback device (114) ,
**characterised in that** the 3D viewing space region (802) comprises a safe viewing space region (308) and a maximum viewing space region (310) where the virtual reality visual content would be responsive to the viewer's translational movement, and a guard range (312) between the safe viewing space region (308) and the maximum viewing space region (310) where the best or fully optimized viewing experience is not guaranteed, wherein the method comprises
implementing visual effects in a subset of the audiovisual presentation within the guard range (312).

8. An apparatus (200) comprising:
means (202, 204, 208) for detecting an observation setup associated with a set of transmission units of an audiovisual presentation comprising virtual reality audiovisual content, wherein the observation setup comprises at least one observation point associated with a three dimensional (3D) viewing space region (802);
in response to the means (202, 204, 208) for detecting whether a condition associated with the observation setup is met, means (202, 204, 208) for selecting a subset of the transmission units of the audiovisual presentation; and
means (202, 204, 208) for causing a control signal to be generated, wherein the control signal is associated with a rendering operation of the selected subset of the transmission units of the audiovisual presentation on a playback device (114) ,
**characterized in that**
the 3D viewing space region (802) comprises a safe viewing space region (308) and a maximum viewing space region (310) where the virtual reality visual content would be responsive to the viewer's translational movement, and a guard range (312) between the safe viewing space region (308) and the maximum viewing space region (310) where the best or fully optimized viewing experience is not guaranteed, and wherein the apparatus (200) comprises
means for implementing visual effects in a subset of the audiovisual presentation within the guard range (312).

9. An apparatus (200) according to claim 8, wherein the at least one observation point associated with a 3D viewing space region comprises at least one static observation point.

10. An apparatus (200) according to claim 8, wherein the at least one observation point associated with a 3D viewing space region comprises at least one dynamic observation point.

## Patentansprüche

1. Verfahren, das Folgendes umfasst:
Empfangen (502) einer Anzeige, die mit einem anfänglichen Beobachtungsaufbau eines Satzes von Übertragungseinheiten einer audiovisuellen Präsentation verknüpft ist, die einen audiovisuellen Inhalt einer virtuellen Realität umfasst, wobei der anfängliche Beobachtungsaufbau mindestens einen Beobachtungspunkt umfasst, der mit einer dreidimensionalen (3D) Betrachtungsraumregion (802) verknüpft ist;
Empfangen (504) einer Anzeige, die mit Bezug auf den anfänglichen Beobachtungsaufbau mit einem beabsichtigten Verhalten einer Wiedergabevorrichtung (114) verknüpft ist;
Bestimmen (506), ob eine Bedingung, die mit dem beabsichtigten Verhalten der Wiedergabevorrichtung (114) verknüpft ist, mit Bezug auf den anfänglichen Beobachtungsaufbau erfüllt ist; und
in Reaktion auf das Bestimmen, ob die Bedingung erfüllt ist, die mit dem beabsichtigten Verhalten der Wiedergabevorrichtung (114) verknüpft ist, Veranlassen (508), dass ein Steuersignal erzeugt wird, wobei das Steuersignal mit einer Renderoperation der audiovisuellen Präsentation auf der Wiedergabevorrichtung (114) verknüpft ist,
**dadurch gekennzeichnet, dass** die 3D-Betrachtungsraumregion (802) eine sichere Betrachtungsraumregion (308) und eine maximale Betrachtungsraumregion (310), wo der visuelle Inhalt einer virtuellen Realität einer Translationsbewegung des Betrachters entsprechen würde, und einen Schutzbereich (312) zwischen der sicheren Betrachtungsraumregion (308) und der maximalen Betrachtungsraumregion (310), wo die beste oder die vollständig optimierte Betrachtungserfahrung nicht garantiert ist, umfasst, wobei das Verfahren Folgendes umfasst
Implementieren von visuellen Effekten in einem Untersatz der audiovisuellen Präsentation im Schutzbereich (312).

2. Verfahren nach Anspruch 1, wobei der mindestens eine Beobachtungspunkt, der mit einer 3D-Betrachtungsraumregion (802) verknüpft ist, mindestens einen statischen Beobachtungspunkt umfasst.

3. Verfahren nach Anspruch 1, wobei der mindestens eine Beobachtungspunkt, der mit einer 3D-Betrachtungsraumregion (802) verknüpft ist, mindestens einen dynamischen Beobachtungspunkt umfasst.

4. Einrichtung (200), die Folgendes umfasst:
Mittel (202, 204, 208) zum Empfangen einer Anzeige, die mit einem anfänglichen Beobachtungsaufbau eines Satzes von Übertragungseinheiten einer audiovisuellen Präsentation verknüpft ist, die einen audiovisuellen Inhalt einer virtuellen Realität umfasst, wobei der anfängliche Beobachtungsaufbau mindestens einen Beobachtungspunkt umfasst, der mit einer dreidimensionalen (3D) Betrachtungsraumregion (802) verknüpft ist;
Mittel (202, 204, 208) zum Empfangen einer Anzeige, die mit einem beabsichtigten Verhalten einer Wiedergabevorrichtung (114) verknüpft ist;
Mittel (202, 204, 208) zum Bestimmen des beabsichtigten Verhaltens der Wiedergabevorrichtung (114) und
in Reaktion auf die Mittel (202, 204, 208) zum Bestimmen des beabsichtigten Verhaltens der Wiedergabevorrichtung (114) Veranlassen, dass ein Steuersignal erzeugt wird, wobei das Steuersignal mit einer Renderoperation der audiovisuellen Präsentation auf der Wiedergabevorrichtung (114) verknüpft ist,
**dadurch gekennzeichnet, dass**
die 3D-Betrachtungsraumregion (802) eine sichere Betrachtungsraumregion (308) und eine maximale Betrachtungsraumregion (310), wo der visuelle Inhalt einer virtuellen Realität einer Translationsbewegung des Betrachters entsprechen würde, und einen Schutzbereich (312) zwischen der sicheren Betrachtungsraumregion (308) und der maximalen Betrachtungsraumregion (310), wo die beste oder die vollständig optimierte Betrachtungserfahrung nicht garantiert ist, umfasst, und wobei die Einrichtung (200) Folgendes umfasst
Mittel zum Implementieren von visuellen Effekten in einem Untersatz der audiovisuellen Präsentation im Schutzbereich (312) .

5. Einrichtung (200) nach Anspruch 4, wobei der mindestens eine Beobachtungspunkt, der mit einer 3D-Betrachtungsraumregion (802) verknüpft ist, mindestens einen statischen Beobachtungspunkt umfasst.

6. Einrichtung (200) nach Anspruch 4, wobei der mindestens eine Beobachtungspunkt, der mit einer 3D-Betrachtungsraumregion (802) verknüpft ist, mindestens einen dynamischen Beobachtungspunkt umfasst.

7. Verfahren, das Folgendes umfasst:
Detektieren (602) eines Beobachtungsaufbaus, der mit einem Satz von Übertragungseinheiten einer audiovisuellen Präsentation verknüpft ist, die einen audiovisuellen Inhalt einer virtuellen Realität umfasst, wobei der Beobachtungsaufbau mindestens einen Beobachtungspunkt umfasst, der mit einer dreidimensionalen (3D) Betrachtungsraumregion (802) verknüpft ist;
in Reaktion auf das Detektieren (604), ob eine mit dem Beobachtungsaufbau verknüpfte Bedingung erfüllt ist, Auswählen (606) eines Untersatzes der Übertragungseinheiten der audiovisuellen Präsentation und
Veranlassen (608), dass ein Steuersignal erzeugt wird, wobei das Steuersignal mit einer Renderoperation des ausgewählten Untersatzes der Übertragungseinheiten der audiovisuellen Präsentation auf einer Wiedergabevorrichtung (114) verknüpft ist,
**dadurch gekennzeichnet, dass** die 3D-Betrachtungsraumregion (802) eine sichere Betrachtungsraumregion (308) und eine maximale Betrachtungsraumregion (310), wo der visuelle Inhalt einer virtuellen Realität einer Translationsbewegung des Betrachters entsprechen würde, und einen Schutzbereich (312) zwischen der sicheren Betrachtungsraumregion (308) und der maximalen Betrachtungsraumregion (310), wo die beste oder die vollständig optimierte Betrachtungserfahrung nicht garantiert ist, umfasst, wobei das Verfahren Folgendes umfasst
Implementieren von visuellen Effekten in einem Untersatz der audiovisuellen Präsentation im Schutzbereich (312).

8. Einrichtung (200), die Folgendes umfasst:
Mittel (202, 204, 208) zum Detektieren eines Beobachtungsaufbaus, der mit einem Satz von Übertragungseinheiten einer audiovisuellen Präsentation verknüpft ist, die einen audiovisuellen Inhalt einer virtuellen Realität umfasst, wobei der Beobachtungsaufbau mindestens einen Beobachtungspunkt umfasst, der mit einer dreidimensionalen (3D) Betrachtungsraumregion (802) verknüpft ist;
in Reaktion auf die Mittel (202, 204, 208) zum Detektieren, ob eine mit dem Beobachtungsaufbau verknüpfte Bedingung erfüllt ist, Mittel (202, 204, 208) zum Auswählen eines Untersatzes der Übertragungseinheiten der audiovisuellen Präsentation und
Mittel (202, 204, 208) zum Veranlassen, dass ein Steuersignal erzeugt wird, wobei das Steuersignal mit einer Renderoperation des ausgewählten Untersatzes der Übertragungseinheiten der audiovisuellen Präsentation auf einer Wiedergabevorrichtung (114) verknüpft ist,
**dadurch gekennzeichnet, dass**
die 3D-Betrachtungsraumregion (802) eine sichere Betrachtungsraumregion (308) und eine maximale Betrachtungsraumregion (310), wo der visuelle Inhalt einer virtuellen Realität einer Translationsbewegung des Betrachters entsprechen würde, und einen Schutzbereich (312) zwischen der sicheren Betrachtungsraumregion (308) und der maximalen Betrachtungsraumregion (310), wo die beste oder die vollständig optimierte Betrachtungserfahrung nicht garantiert ist, umfasst, und wobei die Einrichtung (200) Folgendes umfasst
Mittel zum Implementieren von visuellen Effekten in einem Untersatz der audiovisuellen Präsentation im Schutzbereich (312) .

9. Einrichtung (200) nach Anspruch 8, wobei der mindestens eine Beobachtungspunkt, der mit einer 3D-Betrachtungsraumregion verknüpft ist, mindestens einen statischen Beobachtens. Umfasst.

10. Einrichtung (200) nach Anspruch 8, wobei der mindestens eine Beobachtungspunkt, der mit einer 3D-Betrachtungsraumregion verknüpft ist, mindestens einen dynamischen Beobachtens. Umfasst.

## Revendications

1. Procédé comprenant le fait de :
recevoir (502) une indication associée à un paramétrage d'observation initial d'un ensemble d'unités de transmission d'une présentation audiovisuelle comprenant un contenu audiovisuel de réalité virtuelle, dans lequel le paramétrage d'observation initial comprend au moins un point d'observation associé à une région d'espace de visualisation tridimensionnel (3D) (802) ;
recevoir (504) une indication associée à un comportement prévu d'un dispositif de lecture (114) par rapport au paramétrage d'observation initial ;
déterminer (506) si une condition associée au comportement prévu du dispositif de lecture (114) par rapport au paramétrage d'observation initial est remplie ; et
s'il est déterminé que la condition associée au comportement prévu du dispositif de lecture (114) est remplie, provoquer (508) la génération d'un signal de commande, dans lequel le signal de commande est associé à une opération de rendu de la présentation audiovisuelle sur le dispositif de lecture (114),
**caractérisé en ce que** la région d'espace de visualisation 3D (802) comprend une région d'espace de visualisation sûre (308) et une région d'espace de visualisation maximale (310) où le contenu visuel de réalité virtuelle serait sensible au déplacement de translation du spectateur, et une plage de garde (312) entre la région d'espace de visualisation sûre (308) et la région d'espace de visualisation maximale (310) où la meilleure expérience de visualisation optimale ou une expérience de visualisation totalement optimisée n'est pas garantie, dans lequel le procédé comprend
mettre en oeuvre des effets visuels dans un sous-ensemble de la présentation audiovisuelle dans la plage de garde (312).

2. Procédé selon la revendication 1, dans lequel l'au moins un point d'observation associé à une région d'espace de visualisation 3D (802) comprend au moins un point d'observation statique.

3. Procédé selon la revendication 1, dans lequel l'au moins un point d'observation associé à une région d'espace de visualisation 3D (802) comprend au moins un point d'observation dynamique.

4. Appareil (200) comprenant :
des moyens (202, 204, 208) pour recevoir une indication associée à un paramétrage d'observation initial d'un ensemble d'unités de transmission d'une présentation audiovisuelle comprenant un contenu audiovisuel de réalité virtuelle, dans lequel le paramétrage d'observation initial comprend au moins un point d'observation associé à une région d'espace de visualisation tridimensionnel (3D) (802) ;
des moyens (202, 204, 208) pour recevoir une indication associée à un comportement prévu d'un dispositif de lecture (114) ;
des moyens (202, 204, 208) pour déterminer le comportement prévu du dispositif de lecture (114) ; et
si les moyens (202, 204, 208) déterminent le comportement prévu du dispositif de lecture (114), provoquer la génération d'un signal de commande, dans lequel le signal de commande est associé à une opération de rendu de la présentation audiovisuelle sur le dispositif de lecture (114),
**caractérisé en ce que**
la région d'espace de visualisation 3D (802) comprend une région d'espace de visualisation sûre (308) et une région d'espace de visualisation maximale (310) où le contenu visuel de réalité virtuelle réagirait au déplacement de translation du spectateur, et une plage de garde (312) entre la région d'espace de visualisation sûre (308) et la région d'espace de visualisation maximale (310) où la meilleure expérience de visualisation optimale ou une expérience de visualisation totalement optimisée n'est pas garantie, et dans lequel l'appareil (200) comprend
des moyens pour mettre en oeuvre des effets visuels dans un sous-ensemble de la présentation audiovisuelle dans la plage de garde (312).

5. Appareil (200) selon la revendication 4, dans lequel l'au moins un point d'observation associé à une région d'espace de visualisation 3D (802) comprend au moins un point d'observation statique.

6. Appareil (200) selon la revendication 4, dans lequel l'au moins un point d'observation associé à une région d'espace de visualisation 3D (802) comprend au moins un point d'observation dynamique.

7. Procédé comprenant le fait de :
détecter (602) un paramétrage d'observation associé à un ensemble d'unités de transmission d'une présentation audiovisuelle comprenant un contenu audiovisuel de réalité virtuelle, dans lequel le paramétrage d'observation comprend au moins un point d'observation associé à une région d'espace de visualisation tridimensionnel (3D) (802) ;
s'il est détecté (604) qu'une condition associée au paramétrage d'observation est remplie, sélectionner (606) un sous-ensemble d'unités de transmission de la présentation audiovisuelle ; et
provoquer (608) la génération d'un signal de commande, dans lequel le signal de commande est associé à une opération de rendu du sous-ensemble sélectionné des unités de transmission de la présentation audiovisuelle sur un dispositif de lecture (114),
**caractérisé en ce que** la région d'espace de visualisation 3D (802) comprend une région d'espace de visualisation sûre (308) et une région d'espace de visualisation maximale (310) où le contenu visuel de réalité virtuelle serait sensible au déplacement de translation du spectateur, et une plage de garde (312) entre la région d'espace de visualisation sûre (308) et la région d'espace de visualisation maximale (310) où la meilleure expérience de visualisation optimale ou une expérience de visualisation totalement optimisée n'est pas garantie,
dans lequel le procédé comprend
la mise en oeuvre d'effets visuels dans un sous-ensemble de la présentation audiovisuelle dans la plage de garde (312).

8. Appareil (200) comprenant :
des moyens (202, 204, 208) pour détecter un paramétrage d'observation associé à un ensemble d'unités de transmission d'une présentation audiovisuelle comprenant un contenu audiovisuel de réalité virtuelle, dans lequel le paramétrage d'observation comprend au moins un point d'observation associé à une région d'espace de visualisation tridimensionnel (3D) (802) ;
si les moyens (202, 204, 208) détectent qu'une condition associée au paramétrage d'observation est remplie, des moyens (202, 204, 208) pour sélectionner un sous-ensemble des unités de transmission de la présentation audiovisuelle ; et
des moyens (202, 204, 208) pour provoquer la génération d'un signal de commande, dans lequel le signal de commande est associé à une opération de rendu du sous-ensemble sélectionné des unités de transmission de la présentation audiovisuelle sur un dispositif de lecture (114),
**caractérisé en ce que**
la région d'espace de visualisation 3D (802) comprend une région d'espace de visualisation sûre (308) et une région d'espace de visualisation maximale (310) où le contenu visuel de réalité virtuelle réagirait au déplacement de translation du spectateur, et une plage de garde (312) entre la région d'espace de visualisation sûre (308) et la région d'espace de visualisation maximale (310) où la meilleure expérience de visualisation optimale ou une expérience de visualisation totalement optimisée n'est pas garantie, et dans lequel l'appareil (200) comprend
des moyens pour mettre en oeuvre des effets visuels dans un sous-ensemble de la présentation audiovisuelle dans la plage de garde (312).

9. Appareil (200) selon la revendication 8, dans lequel l'au moins un point d'observation associé à une région d'espace de visualisation 3D comprend au moins un point d'observation statique.

10. Appareil (200) selon la revendication 8, dans lequel l'au moins un point d'observation associé à une région d'espace de visualisation 3D comprend au moins un point d'observation dynamique.
